# EUROPEAN PATENT APPLICATION

(11) **EP 3 065 254 A1**
(43) Date of publication of application: **07.09.2016**
(21) Application number: 14858744.7
(22) Date of filing: 28.05.2014
(51) Int. Cl.: H02J 7/00, B60L 3/00, B60L 11/18, G01C 21/34, H02J 13/00

(54) **CONTROL METHOD, PROGRAM, INFORMATION PROCESSING DEVICE, AND RESERVATION SYSTEM**

(30) Priority: 31.10.2013 JP 2013226397
(71) Applicant: Panasonic Intellectual Property Corporation of America, Torrance, CA 90503 (US)
(72) Inventor: AMANO, Hiroshi, Osaka-shi, Osaka 540-6207 (JP); OHMORI, Motoji, Osaka-shi, Osaka 540-6207 (JP); NAKANO, Toshihisa, Osaka-shi, Osaka 540-6207 (JP)
(74) Representative: Grünecker Patent- und Rechtsanwälte PartG mbB
(86) International application number: PCT/JP2014/002831
(87) International publication number: WO 2015/063967

(57) **Abstract**

In a reservation system that reserves a charger to charge a power source of an electric automobile, a control method of an information processing device is provided enabling a charger to be reserved, taking into consideration arriving at a destination earlier. The information processing device is caused to search for a charger existing within a predetermined range from a current location in a case where the battery level has been determined to have fallen below a first threshold value, and in a case where a destination has been set in the application and in a case where a plurality of searched chargers exist, to calculate a predicted charging end point-in-time at each charger, based on a predicted arrival point-in-time to each charger and the availability state and charging capability of each charger, and in a case where with the calculated predicted charging end point-in-time for each charger as the departure point-in-time from each charger, to effect control to reserve a charger of which the predicted destination arrival point-in-time is the earliest of the calculated predicted destination arrival point-in-times for each charger.

## Description

### Technical Field

The present disclosure relates to a control method, a method, a program, an information processing device, and a reservation system for performing reservation for a charging facility that can charge a battery device, which is a source of power of an electric automobile.

### Background Art

In recent years, there has been interest in electric automobiles having battery devices that can be charged by an external power source, from the perspectives of good fuel mileage and environmental conservation. Away from home, charging of the battery devices of such electric vehicles is performed at charging facilities, such as charging stations which have charging devices. However, this takes more time as compared to refueling gasoline automobiles which are currently widespread. Accordingly, situations are conceivable in which a driver stops at a charging facility to charge the battery device of the electric automobile, but other electric automobiles are already charging their battery devices, and the driver has to wait a long time for a charging device to become available. Consequently, it is assumed that usage of charging facilities will be by reservation only, and technology relating to a reservation system of charging facilities has been disclosed (PTL 1).

### Citation List

### Patent Literature

PTL 1: Japanese Patent No. 5106508

### Summary of Invention

### Technical Problem

However, there has been need for further improvement in the technology disclosed in the prior literature 1.

### Solution to Problem

A control method to control an information processing device according to an embodiment of the present disclosure is a control method to control the information processing device, connected to an electric automobile, and connected to a reservation system that reserves a charger to charge a power source of the electric automobile, and storing an application to guide a travel route to the electric automobile based on map information. A computer of the information processing device is caused to acquire information indicating a battery level of the power source from a controller managing the power source of the electric automobile, access the reservation system in a case where the battery level has been determined to have fallen below a first threshold value, and search for a charger existing within a predetermined range from a current location, based on the map information, receive information indicating an availability state and charging capability of the searched charger from the reservation system, calculate a predicted charging end point-in-time at each charger, based on a predicted arrival point-in-time to each charger and the availability state and charging capability of each charger, in a case where a destination has been set in the application and in a case where a plurality of searched chargers exist, calculate a predicted destination arrival point-in-time of arrival at the destination from each charger, with the calculated predicted charging end point-in-time for each charger as the departure point-in-time from each charger, effect control to select a charger of which the predicted destination arrival point-in-time is the earliest of the calculated predicted destination arrival point-in-times for each charger, and perform processing for the reservation system to reserve the selected charger.

General or specific aspects may be realized by a system, method, integrated circuit, computer program, or recording medium, and may be realized by any combination of a system, device method, integrated circuit, computer program, and recording medium.

### Advantageous Effects of Invention

According to the above-described aspect, further improvement has been realized.

### Brief Description of Drawings

[Fig. 1] Fig. 1 is an overall configuration diagram of an information processing device, control method, and reservation system according to a first embodiment of the present disclosure.
[Fig. 2] Fig. 2 is a block diagram illustrating the configuration of a vehicle according to the first embodiment of the present disclosure.
[Fig. 3] Fig. 3 is a block diagram illustrating the configuration of a server according to the first embodiment of the present disclosure.
[Fig. 4] Fig. 4 is a block diagram illustrating the configuration of a charger according to the first embodiment of the present disclosure.
[Fig. 5] Fig. 5 is a diagram illustrating an example of a reservation candidate list according to the first embodiment of the present disclosure.
[Fig. 6] Fig. 6 is a sequence diagram illustrating the overall operations of charging reservation processing of the information processing system according to the first embodiment of the present disclosure.
[Fig. 7] Fig. 7 is a flowchart illustrating charging proposal processing of the information processing device according to the first embodiment of the present disclosure.
[Fig. 8] Fig. 8 is a flowchart illustrating vehicle information acquisition processing of the information processing device, and reservation acceptance processing of the server (first half) according to the first embodiment of the present disclosure.
[Fig. 9] Fig. 9 is a flowchart illustrating reservation acceptance processing of the server (second half) and route guidance processing according to the first embodiment of the present disclosure.
[Fig. 10] Fig. 10 is a flowchart illustrating a flow for calculation of a predicted charging start point-in-time and a predicted charging end point-in-time according to the first embodiment of the present disclosure.
[Fig. 11] Fig. 11 is a flowchart illustrating a flow for calculation of a predicted destination arrival point-in-time according to the first embodiment of the present disclosure.
[Fig. 12] Fig. 12 (a), (b), and (c) each are diagrams illustrating an example of a time chart indicating operations of the calculation of the predicted charging start point-in-time and predicted charging end point-in-time according to the first embodiment of the present disclosure.
[Fig. 13] Fig. 13 (a), (b), and (c) each are diagrams illustrating an example of a time chart indicating operations of the calculation of the predicted charging start point-in-time and predicted charging end point-in-time according to the first embodiment of the present disclosure.
[Fig. 14] Fig. 14 is a diagram illustrating an example of the relationship between the current location of a vehicle, location of chargers, route points, destination, and route, according to the first embodiment of the present disclosure.
[Fig. 15] Fig. 15 (a) through (e) each are diagrams illustrating an example of a time chart indicating operations of the calculation of the predicted destination arrival point-in-time for each charger according to the first embodiment of the present disclosure.
[Fig. 16] Fig. 16 is a diagram illustrating an example of a charging proposal display on a user interface of the information processing device according to the present disclosure.
[Fig. 17] Fig. 17 is a diagram illustrating an example of a necessary charging power input display on the user interface of the information processing device according to the present disclosure.
[Fig. 18] Fig. 18 is a diagram illustrating an example of a necessary charging power input display on the user interface of the information processing device according to the present disclosure.
[Fig. 19] Fig. 19 is a diagram illustrating an example of a display of predicted charging end point-in-times and predicted destination arrival point-in-times on the user interface of the information processing device, for every charger candidate, according to the present disclosure.
[Fig. 20] Fig. 20 is a diagram illustrating an example of a display, when executing prediction processing, on the user interface of the information processing device according to the present disclosure.
[Fig. 21] Fig. 21 is a diagram illustrating an example of a display, when executing prediction processing, on the user interface of the information processing device according to the present disclosure.
[Fig. 22] Fig. 22 is a diagram illustrating an example of a display on the user interface of the information processing device according to the present disclosure, in a case of having set a charger, regarding which a reservation has been made, as a route point in an application which guides a travel route.

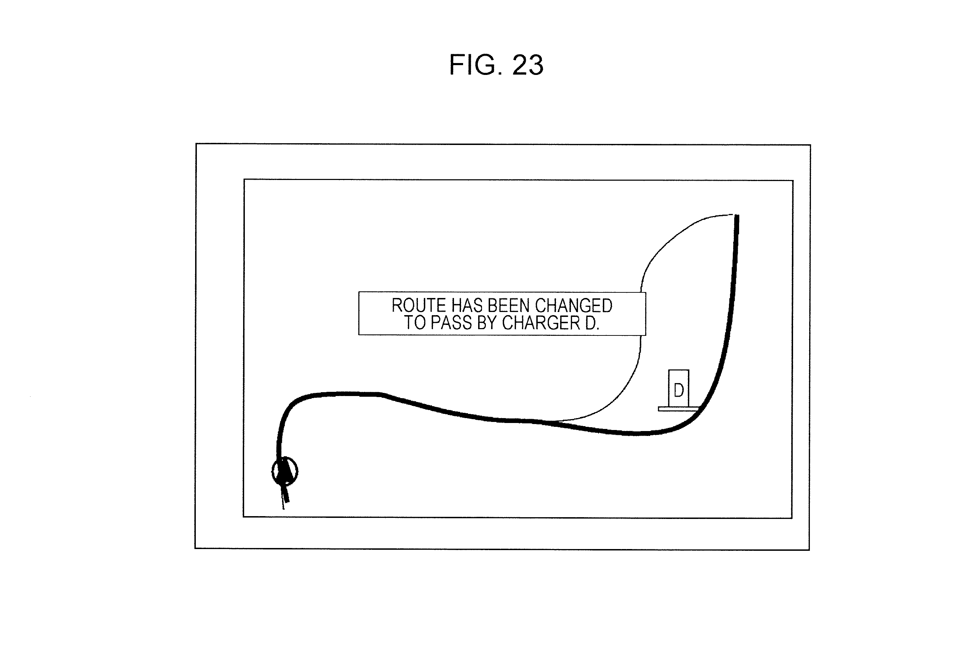

[Fig. 23] Fig. 23 is a diagram illustrating an example of a display on the user interface of the information processing device according to the present disclosure, in a case of having set a charger, regarding which a reservation has been made, as a route point in an application which guides a travel route.
[Fig. 24] (A) is a diagram illustrating an overall image of service provided by an information management system according to the present embodiment, (B) is a diagram illustrating an example where a device manufacturer serves as a data center operator, and (C) is a diagram illustrating an example where a either one of a device manufacturer and a management company serves as a data center operator.
[Fig. 25] Fig. 25 is a diagram illustrating an overall image of service provided by an information management system according to a type 1 service (in-house data center type cloud service).
[Fig. 26] Fig. 26 is a diagram illustrating an overall image of service provided by an information management system according to a type 2 service (laaS usage type cloud service).
[Fig. 27] Fig. 27 is a diagram illustrating an overall image of service provided by an information management system according to a type 3 service (PaaS usage type cloud service).
[Fig. 28] Fig. 28 is a diagram illustrating an overall image of service provided by an information management system according to a type 4 service (SaaS usage type cloud service).

### Description of Embodiments

### (Underlying Knowledge Forming Basis of the Present Invention)

The technology disclosed in PTL 1 discloses a terminal onboard an electric automobile, and a control server 3 capable of communicating with a station server 5 installed at a charging station 4. The control server 3 receives charging station information and position information of each charging station from each station server 5, and on the other hand receives battery level information of the electric automobile 6 and location information of the electric automobile 6 from the terminal. The control server 3 searches for charging stations 4 which can be reached, based on the charging station information and position information of the charging stations 4, and the battery level information of the electric automobile 6 and location information of the electric automobile 6. The control server 3 calculates travel time to the searched charging stations 4 and the charging wait time after arriving, and extracts a charging station 4 regarding which the sum of the travel time and the charging wait time is the smallest.

However, the above technology decides charging stations without taking into consideration the factor of a destination. Accordingly, even in a case where an electric automobile is being driven toward a direction, for example, there are cases in the above technology where a charging station is extracted which is at location which would take the driver away from the destination, due to the conditions of the total of the travel time and charging wait time being small. In this case, there has been a problem that arrival at the destination ends up being later, even through charging can be started earlier. That is to say, the factor of a destination is not taken into consideration to the above technology, so charging stations could not be extracted giving priority to reaching the destination earlier.

Accordingly, the following improvement measures were studied to improve the functionality of a charging facility reservation system.

One aspect of a control method to control an information processing device is
a control method to control the information processing device, connected to an electric automobile, and connected to a reservation system that reserves a charger to charge a power source of the electric automobile, and storing an application to guide a travel route to the electric automobile based on map information.

A computer of the information processing device is caused to
acquire information indicating a battery level of the power source from a controller managing the power source of the electric automobile,
access the reservation system in a case where the battery level has been determined to have fallen below a first threshold value, and search for a charger existing within a predetermined range from a current location, based on the map information,
receive information indicating an availability state and charging capability of the searched charger from the reservation system,
calculate a predicted charging end point-in-time at each charger, based on a predicted arrival point-in-time to each charger and the availability state and charging capability of each charger, in a case where a destination has been set in the application and in a case where a plurality of searched chargers exist,
calculate a predicted destination arrival point-in-time of arrival at the destination from each charger, with the calculated predicted charging end point-in-time for each charger as the departure point-in-time from each charger,
effect control to select a charger of which the predicted destination arrival point-in-time is the earliest of the calculated predicted destination arrival point-in-times for each charger, and
perform processing for the reservation system to reserve the selected charger.

According to the above aspect, in a case where a destination has been set in the application to guide the travel route of the electric automobile based on the map information, and in a case where a plurality of searched chargers exist within a predetermined range for the current location, calculation is caused to be performed for a predicted charging end point-in-time at each charger, based on a predicted arrival point-in-time to each charger and the availability state and charging capability of each charger, calculation is caused to be performed for a predicted destination arrival point-in-time of arrival at the destination from each charger, with the calculated predicted charging end point-in-time for each charger as the departure point-in-time from each charger, control is caused to be effected to select a charger of which the predicted destination arrival point-in-time is the earliest of the calculated predicted destination arrival point-in-times for each charger, and processing is caused to be performed for the reservation system to reserve the selected charger.

Consequently, the frequency of reservation of a charger off of the travel route originally planned to the destination, or a charger at a location farther away from the destination, is reduced, so consumption of unnecessary power source of the electric automobile and wear on the tires, due to unnecessary travel in heading toward the destination, can be reduced. Further, cases where the driver stops by chargers at locations off of the travel route originally planned to the destination are reduced, so the driving wasting time by making mistakes at which intersection to turn at when going away from the travel route can be prevented.

In the above aspect, for example,
processing may be caused to be performed to automatically set the selected charger in the application as a route point.

According to the above aspect, the selected charger is automatically set in the application, which guides the travel route of the electric automobile based on map information, as a route point. Accordingly, the user does not have to set the travel route toward the charger, and no operations which would impede driving are involved. The selected charger is set as a route point, so the route to the destination does not have to be set again after charging the power source of the electric automobile at the charger, so waste of time due to operations at the information processing device can be prevented.

In the above aspect, for example,
in a case where determination is made that the battery level has fallen below the first threshold value, notification may be caused to be made to the driver of the electric automobile to that effect via a display of the information processing device,
detection may be caused to be performed regarding whether or not an instruction has been made in response to the notification, to the effect of making a charging reservation for the power source,
in a case where the instruction has been made, the current location of the information processing device may be caused to be detected using a position information detection system, and
chargers in a predetermined range from the detected current location may be searched based on the map information.

According to the above aspect, in a case where the battery level is low, the driver can be notified to that effect. Accordingly, the driver can concentrate on driving without having to worry about the battery level while driving, thereby suppressing occurrence of traffic accidents due to distraction.

In the above aspect, for example,
the predicted arrival point-in-time to each charger may be calculated,
a wait time at each charger may be calculated, based on the predicted arrival point-in-time to each charger and the availability state of each charger, and
a point-in-time at which the battery level of the power source reaches a predetermined amount or more may be calculated, based on the wait time at each charger and the charging capability of each charger.

In the above aspect, for example,
the predetermined amount may be an amount equivalent to 100% of the capacity of the power source.

In the above aspect, for example,
the predetermined amount may be an amount equivalent to 80% of the capacity of the power source.

In the above aspect, for example,
in a case where the instruction has been not made, determination may be caused to be made regarding whether or not the battery level has fallen below a second threshold value that is lower than the first threshold value.

In the above aspect, for example,
in a case where determination has been made that the battery level has fallen below the second threshold value, notification may be caused to be made to the driver of the electric automobile to that effect via the display of the information processing device.

In the above aspect, for example,
the predetermined range may be a range of distance which the electric automobile can travel on the battery level of the power source.

In the above aspect, for example,
in a case where processing to reserve the charger has been caused to be executed, a display to the effect that the reservation has been completed, and a usage start point-in-time of the charger that has been reserved, may be displayed on the display of the information processing device.

In the above aspect, for example,
in a case where processing to reserve the charger has been caused to be executed, a usage end point-in-time of the charger that has been reserved may be displayed on the display of the information processing device.

In the above aspect, for example,
the charging capability of each charger may be a charging amount per unit time of each of the chargers.

In another aspect,
a program, stored in an information processing device, connected to an electric automobile, and connected to a reservation system that reserves a charger to charge a power source of the electric automobile, to guide a travel route to the electric automobile based on map information,
causes acquisition of information indicating a battery level of the power source from a controller managing the power source of the electric automobile,
causes access of the reservation system in a case where the battery level has been determined to have fallen below a first threshold value, and causing search for a charger existing within a predetermined range from a current location, based on the map information,
causes reception of information indicating an availability state and charging capability of the searched charger from the reservation system,
causes calculation of a predicted charging end point-in-time at each charger, based on a predicted arrival point-in-time to each charger and the availability state and charging capability of each charger, in a case where a destination has been set in the application and in a case where a plurality of searched chargers exist,
causes calculation of a predicted destination arrival point-in-time of arrival at the destination from each charger, with the calculated predicted charging end point-in-time for each charger as the departure point-in-time from each charger,
causes control to be effected to select a charger of which the predicted destination arrival point-in-time is the earliest of the calculated predicted destination arrival point-in-times for each charger, and
causes processing to be performed for the reservation system to reserve the selected charger.

In another aspect,
an information processing device includes:
a connector that is connected to an electric automobile;
a communication unit connected to a reservation system that reserves a charger to charge a power source of the electric automobile;
memory that stores map information;
a processing unit that guides a travel route of the electric automobile based on the map information; and
a display that guides a travel route of the electric automobile.

The processing unit
acquires information indicating a battery level of the power source from the connector,
accesses the reservation system in a case where the battery level has been determined to have fallen below a first threshold value, and searches for a charger existing within a predetermined range from a current location, based on the map information,
receives information indicating an availability state and charging capability of the searched charger from the reservation system,
calculates a predicted charging end point-in-time at each charger, based on a predicted arrival point-in-time to each charger and the availability state and charging capability of each charger, in a case where a destination has been set in the application and in a case where a plurality of searched chargers exist,
calculates a predicted destination arrival point-in-time of arrival at the destination from each charger, with the calculated predicted charging end point-in-time for each charger as the departure point-in-time from each charger,
effects control to select a charger of which the predicted destination arrival point-in-time is the earliest of the calculated predicted destination arrival point-in-times for each charger, and
performs processing for the reservation system to reserve the selected charger.

In another aspect,
in a reservation system that reserves a charger to charge a power source of an electric automobile,
an information processing device storing and implementing an application that guides a travel route of the electric automobile based on map information
acquires information indicating a battery level of the power source from a controller managing the power source of the electric automobile,
accesses the reservation system in a case where the battery level has been determined to have fallen below a first threshold value, and searches for a charger existing within a predetermined range from a current location, based on the map information, and
references the reservation system for information indicating an availability state and charging capability of the searched chargers.

The reservation system
manages information indicating the availability state and charging capability of the chargers, and
transmits, to the information processing device, the information indicating the availability state and charging capability of the searched chargers, in accordance with the referencing.

The information processing device
calculates a predicted charging end point-in-time at each charger, based on a predicted arrival point-in-time to each charger and the availability state and charging capability of each charger, in a case where a destination has been set in the application and in a case where a plurality of searched chargers exist,
calculates a predicted destination arrival point-in-time of arrival at the destination from each charger, with the calculated predicted charging end point-in-time for each charger as the departure point-in-time from each charger,
effects control to select a charger of which the predicted destination arrival point-in-time is the earliest of the calculated predicted destination arrival point-in-times for each charger, and
performs processing for the reservation system to reserve the selected charger.

An embodiment of the present disclosure will be described with reference to the drawings.

### (Overall Image of Service to be Provided)

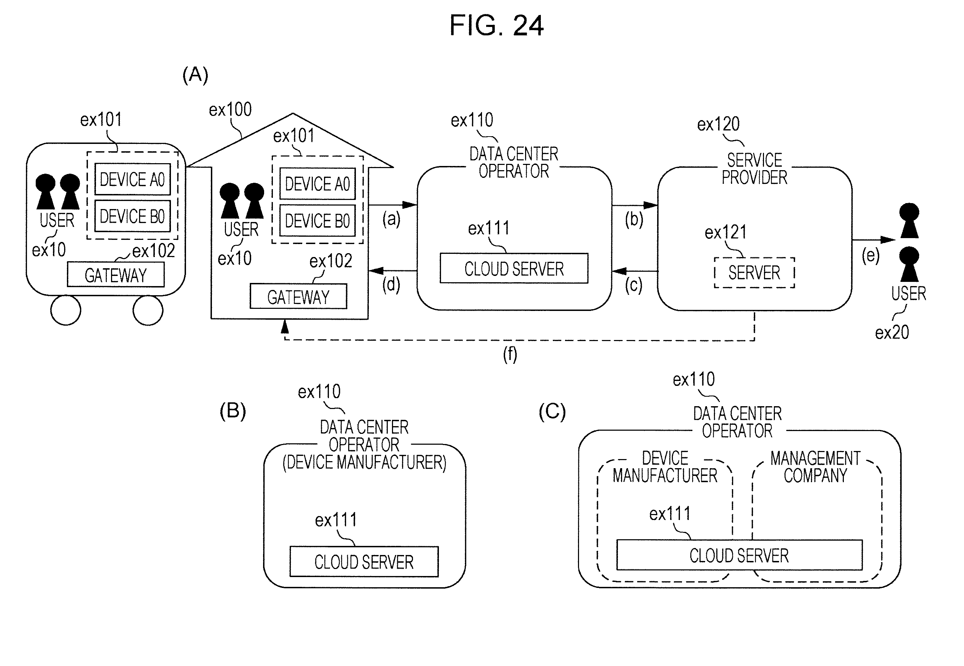

Fig. 24(A) illustrates an overall image of an information management system according to the present embodiment.

A group ex100 is, for example, a corporation, an organization, a home, or the like. The scale thereof is irrelevant. The group ex100 has multiple devices ex101 including a device A0 and a device B0, and a home gateway ex102. The multiple devices ex101 include those which are capable of connecting to the Internet, (e.g., a smartphone, personal computer (PC), television set, etc.), and also include those which are incapable of connecting to the Internet on their own (e.g., lighting, washing machine, refrigerator, etc.). There may be, in the multiple devices ex101, those which are incapable of connecting to the Internet on their own but can be connected to the Internet via the home gateway ex102. A user ex10 also uses the multiple devices ex101 within the group ex100.

The data center operator ex110 includes a cloud server ex111. The cloud server ex111 is a virtual server which collaborates with various devices over the Internet. The cloud server ex111 primarily manages massive data (big data) or the like that is difficult to handle with normal database management tools and the like. The data center operator ex110 manages data, manages the cloud server ex111, and serves as an operator of a data center which performs the management. The services provided by the data center operator ex110 will be described in detail later. Now, the data center operator ex110 is not restricted just to corporations performing management of data and management of the cloud server ex111. For example, In a case where an appliance manufacturer which develops or manufactures one of the electric appliances of the multiple devices ex101 manages the data or manages the cloud server ex111 or the like, the appliance manufacturer serves as the data center operator ex110, as illustrated in Fig. 24(B). Also, the data center operator ex110 is not restricted to being a single company. For example, in a case where an appliance manufacturer and a management company manage data or manage the cloud server ex111 either conjointly or in shared manner, as illustrated in Fig. 24(C), both, or one or the other, serve as the data center operator ex110.

The service provider ex120 includes a server ex121. The scale of the server ex121 here is irrelevant, and also includes memory or the like in a PC used by an individual, for example. Further, there may be cases where the service provider ex120 does not include a server ex121.

Note that the home gateway ex102 is not indispensable to the above-described information management system. In a case where the cloud server ex111 performs all data management for example, the home gateway ex102 is unnecessary. Also, there may be cases where there are no devices incapable of Internet connection by themselves, such as in a case where all devices in the home are connected to the Internet.

Next, the flow of information in the above-described information management system will be described.

The device A0 and the device B0 in the group ex100 each transmit log information to the cloud server ex111 of the data center operator ex110. The cloud server ex111 collects log information from the device A0 and device B0 (arrow (a) in Fig. 24). Here, log information is information indicating the operating state of the multiple devices ex101 for example, date and time of operation, and so forth. For example, log information includes television viewing history, recorder programming information, date and time of the washing machine running, amount of laundry, date and time of the refrigerator door opening and closing, number of times of the refrigerator door opening and closing, and so forth, but is not restricted to these, and various types of information which can be acquired from the various types of devices may be included. The log information may be directly provided to the cloud server ex111 from the multiple devices ex101 themselves over the Internet. Alternatively, the log information may be temporarily collected from the multiple devices ex101 to the home gateway ex102, and be provided from the home gateway ex102 to the cloud server ex111.

Next, the cloud server ex111 of the data center operator ex110 provides the collected log information to the service provider ex120 in a certain increment. The certain increment here may be an increment in which the data center operator ex110 can organize the collected information and provide to the service provider ex120, or may be in increments requested by the service provider ex120. Also, the log information has been described as being provided in certain increments, but the amount of information of the log information may change according to conditions, rather than being provided in certain increments. The log information is saved in the server ex121 which the service provider ex120 has, as necessary (arrow (b) in Fig. 24). The service provider ex120 organizes the log information into information suitable for the service to be provided to the user, and provides to the user. The user to which the information is to be provided may be the user ex10 who uses the multiple devices ex101, or may be an external user ex20. An example of a way to provide information to the users 410 and 420 may be to directly provide information from the service provider ex120 to the users 410 and 420 (arrows (b), (e), and (f) in Fig. 24). Also, an example of a way to provide information to the user ex10 may be to route the information to the user ex10 through the cloud server ex111 of the data center operator ex110 again (arrows (c) and (d) in Fig. 24). Alternatively, the cloud server ex111 of the data center operator ex110 may organize the log information into information suitable for the service to be provided to the user, and provide to the service provider ex120.

Also, the user ex10 may be different from the user ex20 or may be the same.

### (First Embodiment)

### <Overall Configuration)

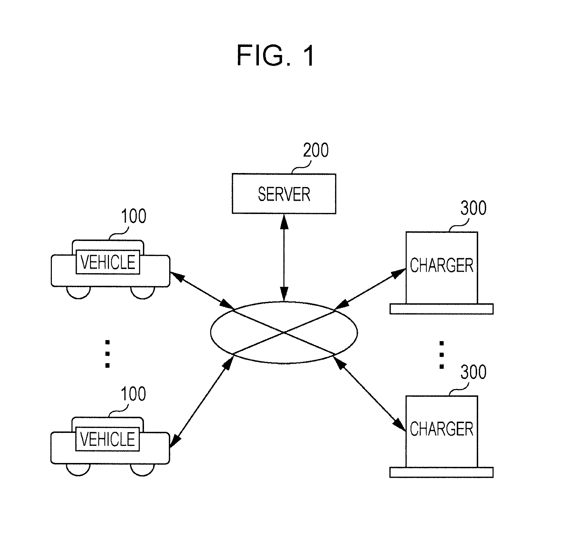

Fig. 1 is an overall configuration diagram of a reservation system (reservation to reserve a charger to charge the power source of an electric automobile) according to a first embodiment of the present disclosure. An information processing system includes a vehicle 100, a server 200, and a charger 300.

### <Configuration>

### <Detailed Configuration of Vehicle>

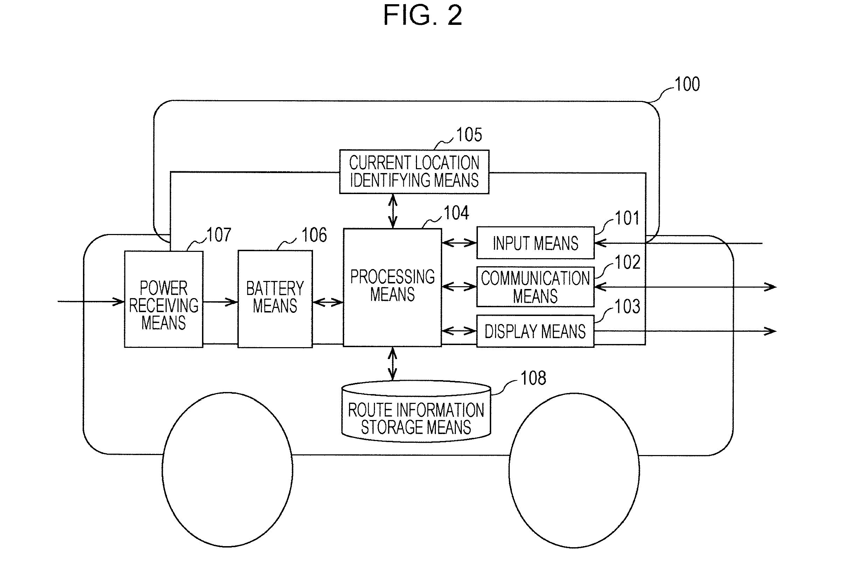

Fig. 2 illustrates a detailed configuration of the vehicle 100.

The vehicle includes input means 101, communication means 102, display means 103, processing means 104, current location identifying means 105, battery means 106, power receiving means 107, and route information storage means 108, as illustrated in Fig. 2.

Note that the input means 101, communication means 102, display means 103, processing means 104, current location identifying means 105, and route information storage means 108, may be of a configuration where an information processing device is provided separately from the vehicle.

The input means 101 accept operations performed by a user as input. For example, setting a destination, setting route points, selecting a charger 300, input of charging amount, input of authentication information, input of a response as to an inquiry, input of a threshold value for remaining battery level at the time of proposing charging to the user, and so forth, are accepted. The input at this time may be input performed using a keyboard, touch panel, mouse, or the like, or may be input performed by voice.

The communication means 102 perform communication with the server 200 and/or communication with the charger 300. The communication means 102 and the server 200 exchange, for example, the current location of the vehicle 100, vehicle information, route information, reservation requests, reservation results, and so forth. Examples of route information include road congestion state as route information, predicted travel time for each road based on the congestion state, and so forth. Examples of the state of the vehicle 100 that is exchanged include vehicular speed, engine revolutions, water temperature, state of the seatbelts, state of the doors, state of the lamps, location information, room temperature, state of the brakes, and so forth. The communication means 102 and the charger 300 exchange, for example, authentication information of the vehicle 100 or the user, remaining battery level of the vehicle 100, and request for charging power amount.

Note that exchange between the vehicle 100 and the charger 300 may be performed directly, or may be performed via the server 200.

The display means 103 display information to the user. For example, map information, route information, charger information, reservation information, vehicle information, and so forth, are displayed.

The processing means 104 perform processing relating to reservation of a charger 300, based on information input from the input means 101, communication means 102, battery means 106, route information storage means 108, current location identifying means 105, and so forth. Route identification, guidance, and so forth, is also performed.

The current location identifying means 105 identifies the current location of the vehicle 100. For example, the current location is identified by measurement by GPS or the like. The current location may also be identified by a measurement system using communication spots such as Wi-Fi, or the current location may also be identified by a measurement system using base station data for cellular phones or smartphones or the like, or may be identified by the user performing input, for example.

The battery means 106 store electricity. Also, the state of the stored power is measured. Examples for storing electricity include, for example, a battery storing DC power, of which lead acid batteries, nickel-hydrogen batteries, lithium ion batteries, sodium-sulfur batteries, redox flow batteries, molten salt batteries, and so forth, are conceivable. Also, electricity may be stored indirectly, and an arrangement such as a fuel cell may be used. Also, the state of power at the battery means 106, standards for chargers 300 which can charge the battery means 106, and so forth, may be output, for example. Any arrangement capable of storing electricity may be used, unrestricted to the above.

The route information storage means 108 stores maps, route information, and so forth. For example, a destination and route points, route information to the destination, a route which the vehicle 100 will pass over past route points to reach the destination, and so forth, are stored as route information in a correlated manner with maps. Also for example, route information such as road congestion information received from the server 200, predicted arrival time, and so forth, are stored. History of electric power consumption of the vehicle 100 having traveled a road on the route, or history of electric power consumption of a vehicle the same as or similar to the vehicle 100 having traveled a road on the route, may be held.

### <Detailed Configuration of Server 200>

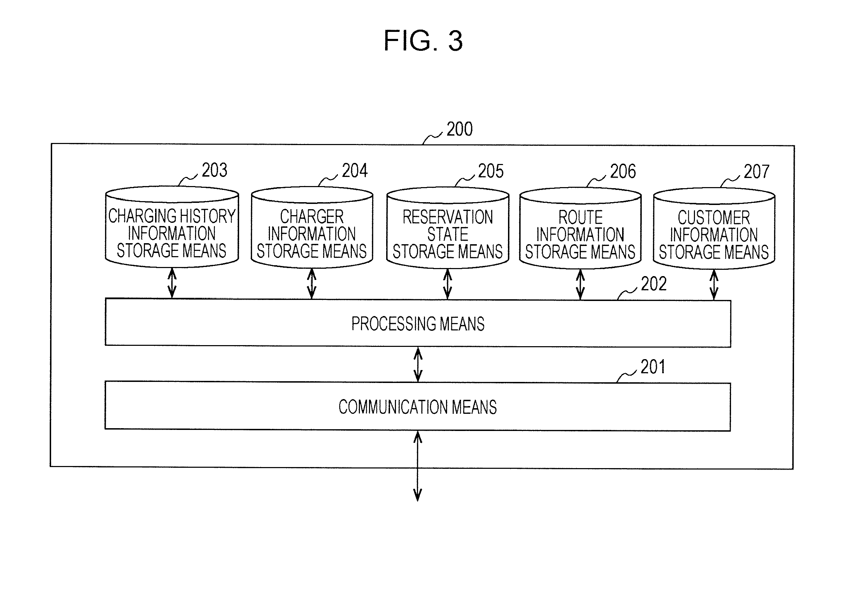

Fig. 3 illustrates a detailed configuration of the server 200.

As illustrated in Fig. 3, the server 200 includes communication means 201, processing means 202, charging history information storage means 203, charger information storage means 204, reservation state storage means 205, route information storage means 206, and customer information storage means 207.

The communication means 201 perform communication with the vehicle 100 and the charger 300. Examples of exchange with the vehicle 100 include the current location of the vehicle 100, vehicle information, route information, reservation requests, reservation results, and so forth. Examples of exchange with the charger 300 include authentication information of the vehicle 100 or the user, reservation state, usage state of a charger 300 indicating how much power from the charger 300 has been charged for haw many minutes, as to the remaining battery level of the vehicle 100, and so forth.

The processing means 202 perform reservation processing and authentication processing of chargers 300, based on information input from the vehicle 100, information input from the charger 300, and information held in the charging history information storage means 203, charger information storage means 204, reservation state storage means 205, route information storage means 206, and customer information storage means 207.

The charging history information storage means 203 hold information used for calculating predicted charging time, which is information necessary for calculating predicted charging time for each particular vehicle 100 or model, according to each particular charger 300 or charger specification. For example, usage history, charging record, and so forth, for each vehicle or model, are held for each charger.

The charger information storage means 204 hold information of the chargers 300. Examples of information held include the rating of the charger 300, number of times used, number of years used, charging speed, charging standard, manufacturing company, serial No., location of charger 300, electric power price per charger, and so forth, for each charger.

The reservation state storage means 205 hold the reservation state of each charger. For example information of a vehicle 100 regarding which using the charger 300 is planned, is held in correlation with date and time.

The route information storage means 206 store map and route information. Examples of route information include destination and route points, a route which the vehicle 100 will pass over past route points to reach the destination, and so forth, stored in a correlated manner with maps. Also for example, road congestion information, predicted arrival time, etc., may be calculated based on the state of the vehicle 100 received from each vehicle, and stored as route information. Also, history of electric power consumption of the vehicle 100 having traveled a road on the route, or history of electric power consumption of a vehicle the same as or similar to the vehicle 100 having traveled a road on the route, may be held, for example.

The customer information storage means 207 holds the identification No. of the vehicle 100, identification No. of the user, corresponding personal name, address, telephone No., credit card No., usage history of the charger 300, payment history, and so forth.

### <Detailed Configuration of Charger 300>

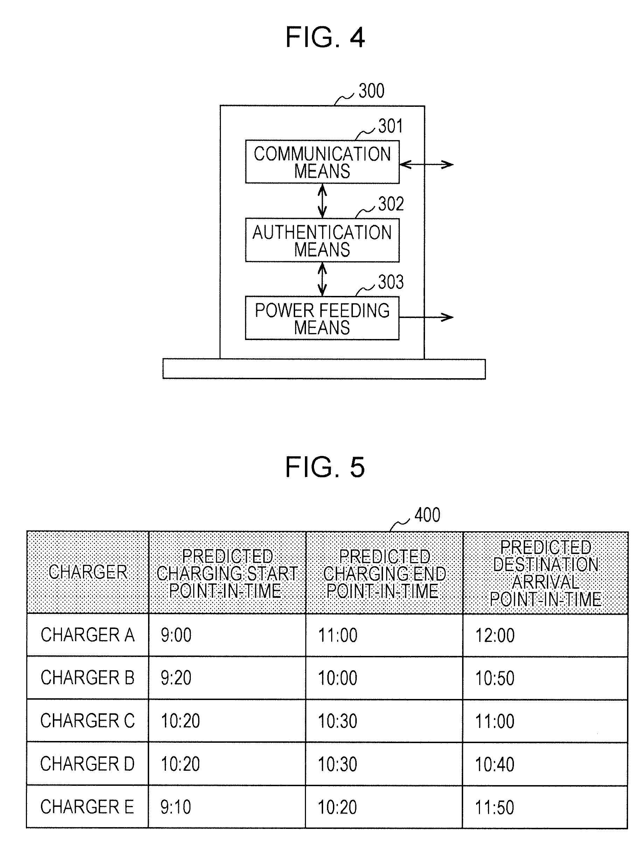

Fig. 4 illustrates a detailed configuration of the charger 300.

The charger 300 includes communication means 301, authentication means 302, and power feeding means 303.

The communication means 301 perform communication with the vehicle 100 and/or server 200. The content of communication with the server 200 includes, for example, authentication information of the vehicle 100 or user, reservation state, and so forth. The content of communication with the vehicle 100 includes, for example, authentication information of the vehicle 100 or user, remaining battery level of the vehicle 100, information of charging power amount, and so forth.

The authentication means 302 authenticate the reservation state of the charger 300 and the vehicle 100 or user, and decides whether or not to feed power to the vehicle 100. For example, the authentication means 302 acquire, from the server 200, authentication information of the vehicle 100 or user that has reserved the charger 300 and has a right to use during a predetermined time slot, perform authentication by matching regarding the vehicle 100 or user of the vehicle 100 requesting power feed, and feed power to a vehicle 100 which has the right to use in a predetermined time slot, but do not feed power otherwise.

The power feeding means 303 charge the vehicle 100.

The configuration of the information processing system according to the first embodiment of the present disclosure has been described above.

The following is a description of operations of the information processing system according to the first embodiment of the present disclosure.

### <Operations>

### <Overall Operations of Information Processing System According to First Embodiment of Present Disclosure>

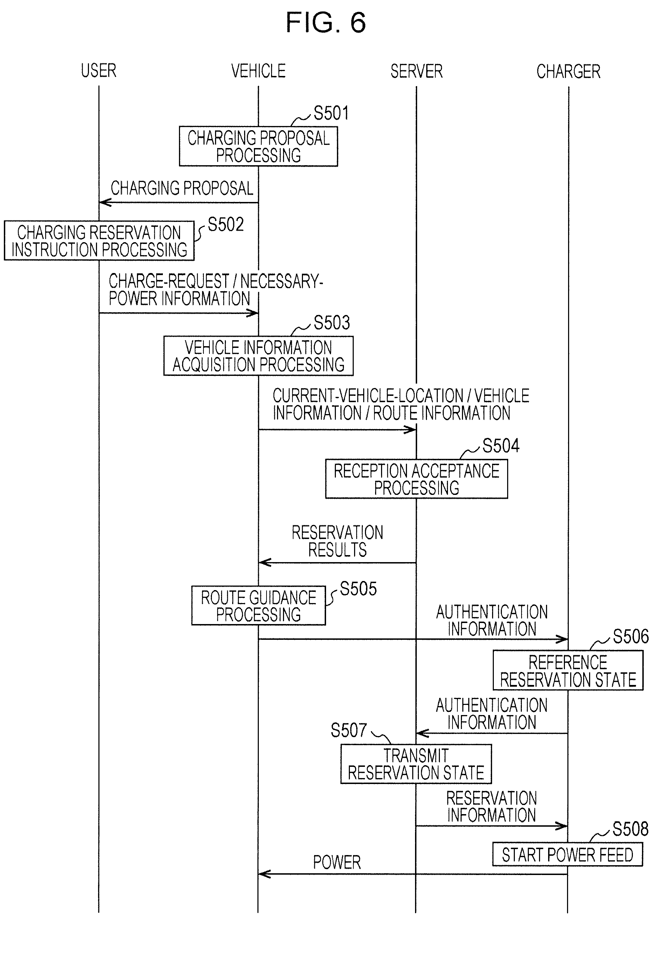

Fig. 6 is a sequence diagram illustrating the overall operations of charging reservation processing of the information processing system according to the first embodiment of the present disclosure.

The vehicle 100 makes a charging proposal to the user via the display means 103 (step S501), and upon the user giving an instruction for a charging reservation via the input means 101 (step S502), the vehicle 100 sends information such as the current location of the vehicle, vehicle information route information, and so forth, to the server 200 (step S503).

The server 200 performs reservation acceptance processing based on the information received from the vehicle 100 and information which the server 200 holds, and sends the reservation results to the vehicle 100 (step S504).

The vehicle 100 receives the reservation results from the server 200, and performs route guidance processing of the user to the charger 300 regarding which reservation has been completed, via the display means 103 (step S505).

After the vehicle 100 reaches the charger 300, the charger 300 references the reservation state as to the server 200 based on authentication information received from the vehicle 100 (step S506). The server 200 confirms the reservation state, and sends reservation information to the charger 300 (step S507). In a case where the vehicle 100 is a vehicle 100 regarding which reservation has been made, power feeding to the vehicle 100 is started, thereby supplying electric power (step S508).

The above has been a description of the sequence diagram representing the overall operations of the information processing system according to the first embodiment of the present disclosure.

The following is a description of detailed operations of the information processing system according to the first embodiment of the present disclosure, with reference to flowcharts.

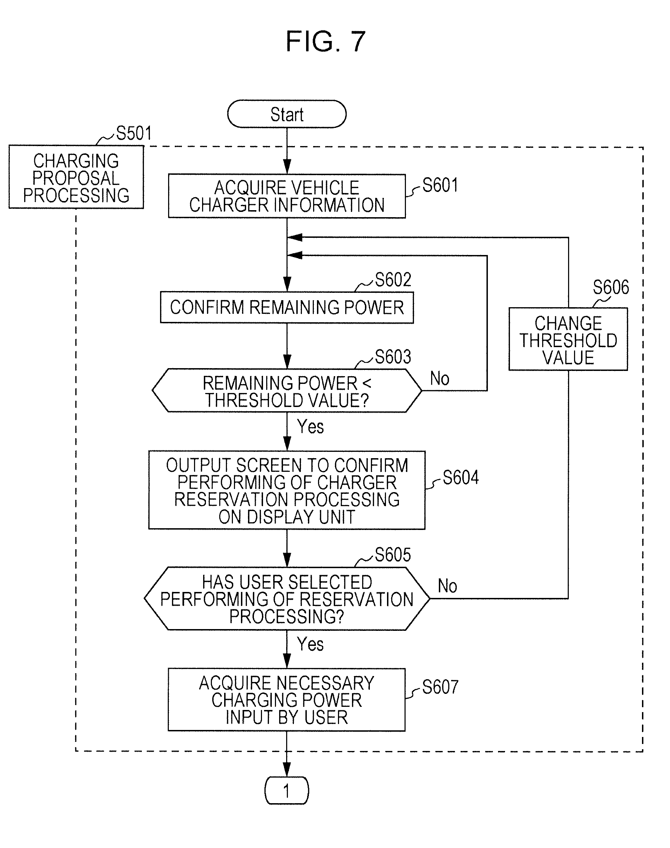

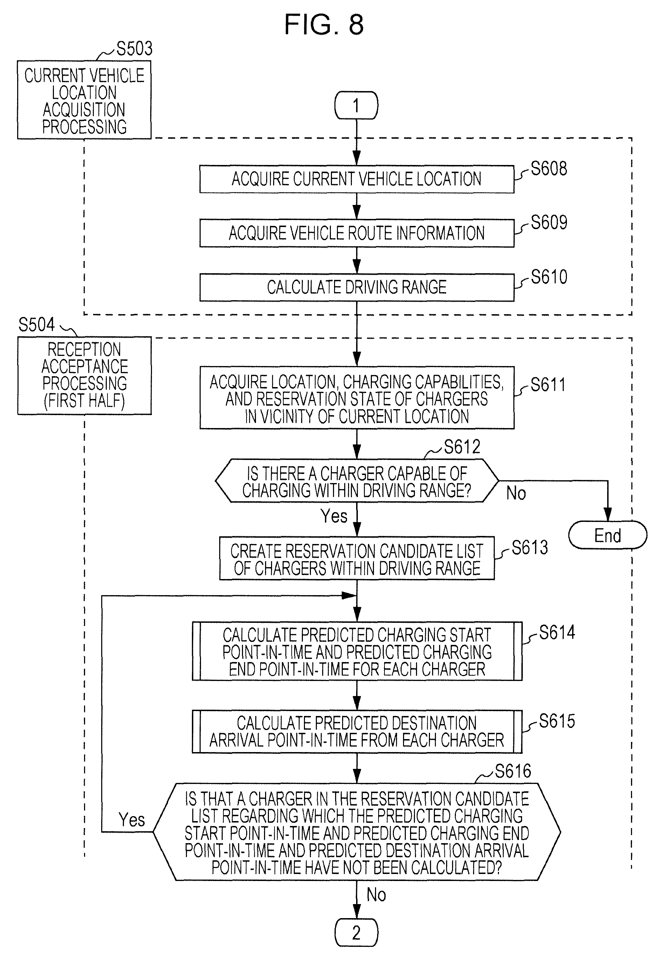

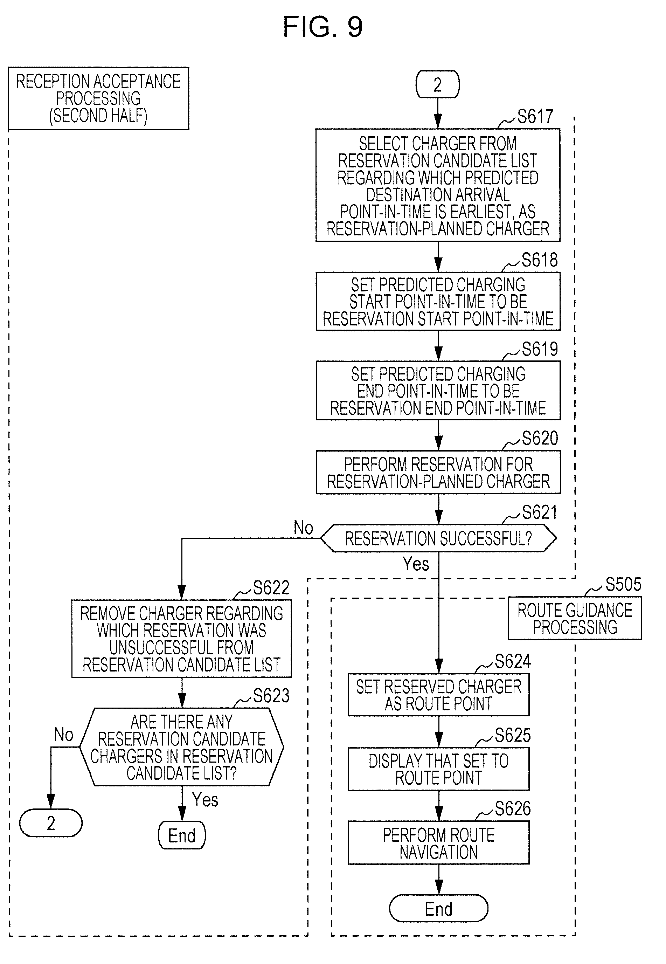

Fig. 7, Fig. 8, and Fig. 9 are a flowchart illustrating detailed operations of the information processing system according to the first embodiment of the present disclosure.

The vehicle 100 acquires information such as a standard of the charger 300 which will match the battery means 106 (step S601). Next, the vehicle 100 confirms the battery level of the battery means 106 (step S602), and compares the battery level with a battery level threshold value which the user has set (step S603). In a case where the battery level is lower than the threshold level, a screen to confirm performing of charger reservation processing is output to the display means 103 (step S604). In a case where the battery level is higher than the threshold level, the flow returns to step S602. Next, the vehicle 100 confirms whether or not the user has selected performing of charger reservation processing at the screen to confirm performing of charger reservation processing (step S605). In a case where the user has selected performing of charger reservation processing, necessary charging power input from the user is acquired (step S607). In a case where the user has not selected performing of charger reservation processing, changing is performed to lower the battery level threshold for confirming charger reservation processing (step S606), and the flow returns to step S602.

The vehicle 100 acquires the current location of the vehicle 100 by the current location identifying means 105 (step S608), and acquires the route from the current location of the vehicle 100 to the destination, from the route information storage means (step S609). Next, the vehicle 100 calculates the driving range from the battery level and route information (step S609). At this time, a simple calculation may be made based on the distance, driving range per unit electric power, and battery level. Alternatively, history of electric power consumption of the vehicle 100 having traveled a road on the route, or history of electric power consumption of the same as or similar model to the vehicle 100 having traveled a road on the route, may be referenced, for example.

The server 200 acquires the current location of the vehicle, the driving range, the vehicle charger information, and the vehicle route information, from the vehicle 100, acquires the location of chargers 300 in the vicinity of the current location of the vehicle, and the charging capabilities of the chargers 300, from the charger information storage means 204, and acquires the reservation states of the chargers 300 from the reservation state storage means 205 (step S611).

The vehicle 100 confirms whether or not there is a charger 300 capable of charging the vehicle 100 within driving range from the current location (step S612). In a case where there are no chargers 300 capable of charging, the processing ends. In a case where there are no chargers 300 here capable of charging, a proposal may be made to the driver to call for roadside assistance such as failure assistance, for example.

In a case where there are chargers 300 capable of charging, a reservation candidate list is compiled, in which are registered the chargers 300 capable of charging that are within the driving distance (step S613).

Fig. 5 illustrates an example of a reservation candidate list 400. The reservation candidate list 400 includes information of chargers which are prediction candidates, a predicted charging start point-in-time indicating the earliest point-in-time at which charging can be started at each charger, a predicted charging end point-in-time indicating a time at which charging will end if charging is started from the predicted charging start point-in-time and the desired amount of charging is performed, and a predicted destination arrival point-in-time indicating the prediction point-in-time at which the destination will be reached if leaving the charger at the predicted charging end point-in-time. Note that the charger information may include information such as the location of the charger and so forth.

Next, the predicted charging start point-in-time and predicted charging end point-in-time of each charger is calculated, and stored in the reservation candidate list (step S614). Next, the predicted destination arrival point-in-time, which is the predicted point-in-time at which the destination will be reached if leaving heading toward the destination after having charged at the charger, for each charger in the reservation candidate list, and stores this in the reservation candidate list (step S615). Confirmation is made regarding whether there is a charger 300 of the chargers 300 in the reservation candidate list regarding which the predicted charging start point-in-time, predicted charging end point-in-time, and predicted destination arrival point-in-time have not been calculated (step S616). If there is a charger 300 regarding which the predicted charging start point-in-time, predicted charging end point-in-time, and predicted destination arrival point-in-time have not been calculated, the flow returns to step S614.

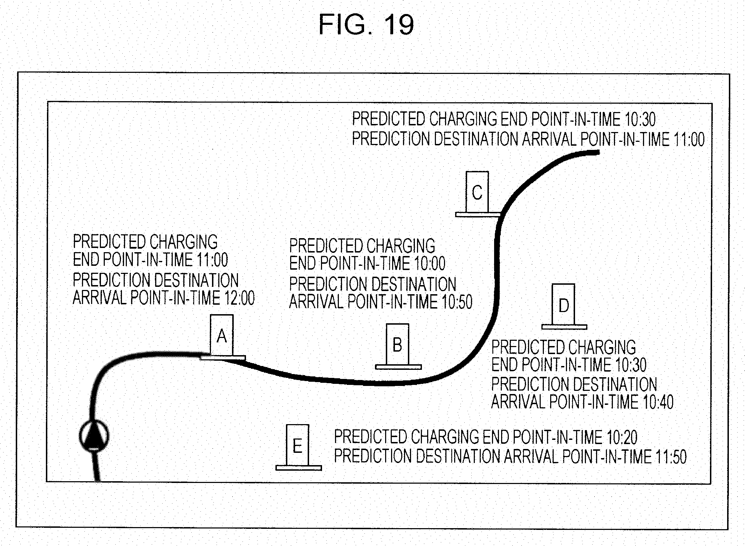

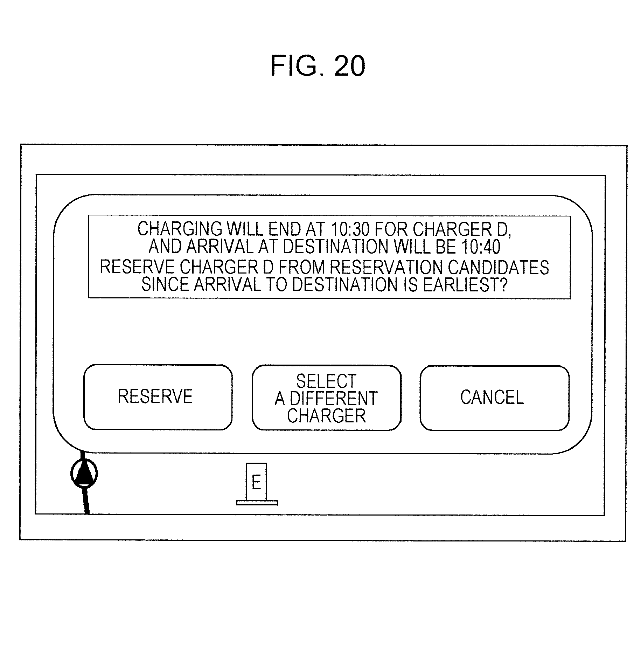

The charger 300 of which the predicted destination arrival point-in-time is the earliest in the compiled reservation candidate list is then set to be the reservation-planned charger (step S617). At this time, the predicted charging end point-in-time and predicted destination arrival point-in-time may be presented to the user for every charger in the reservation candidate list on the display means 103 as illustrated in Fig. 19, for example, or reservation execution confirmation may be made to the user on the display means 103, as illustrated in Fig. 20.

In a case where the user has selected a charger other than the charger 300 which the information processing device (vehicle 100) has proposed as a result of the reservation execution confirmation, the processing after step S617 may be carried out using the charger which the user has selected as the reservation-planned charger instead of the charger in the reservation candidate list regarding which the predicted destination arrival point-in-time is the earliest being used as the reservation-planned charger.

Next, with the predicted charging start point-in-time as the predicted start point-in-time of the charger 300 (step S618), and the predicted charging end point-in-time as the predicted end point-in-time of the charger 300 (step S619), reservation of the reservation-planned charger is carried out (Step S620). That is to say, the reservation-planned charger is reserved, with a time slot from the predicted charging start point-in-time to the predicted charging end point-in-time specified. At this time, the reservation being carried out means the predicted charging start point-in-time and predicted charging end point-in-time of the reservation-planned charger being listed in the reservation information of the charger 300 held in the reservation state storage means 205, in a correlated manner with the identification No. of the vehicle 100 or user.

Determination is then made regarding whether or not the reservation was successful (Step S621). An example of a case where reservation is not successful here is a case where another vehicle 100 or user has performed a reservation at the same time or slightly earlier, and the reservations have collided.

In a case where the reservation is not successful, the charger 300 regarding which the reservation has failed is delete from the reservation candidate list (step S622). Thereafter, determination is made regarding whether or not there still is a charger 300 remaining in the reservation candidate list (step S623), and in a case where there are no reservation candidate chargers remaining, the processing ends. In a case where there is a reservation candidate charger remaining, the flow advances to step S617. In a case where there are no reservation candidate chargers remaining, a proposal may be made to the driver to call for roadside assistance such as failure assistance, for example. Alternatively, reservation candidate chargers may be searched for again, referencing the newest reservation state of the chargers.

In a case where the reservation is successful, the reserved charger 300 is set as a route point and the route is recalculated (step S624), the user is notified that the reserved charger 300 has been set to a route point (step S625), and route guidance to the charger 300 and the destination is performed (step S626).

Thus, description has been made of the sequence diagram representing the overall operations of the information processing system according to the first embodiment of the present disclosure, and flowcharts of each of the processes within the sequence.

### <Calculation Flow for Predicted Charging Start Point-In-Time and Predicted Charging End Point-In-Time>

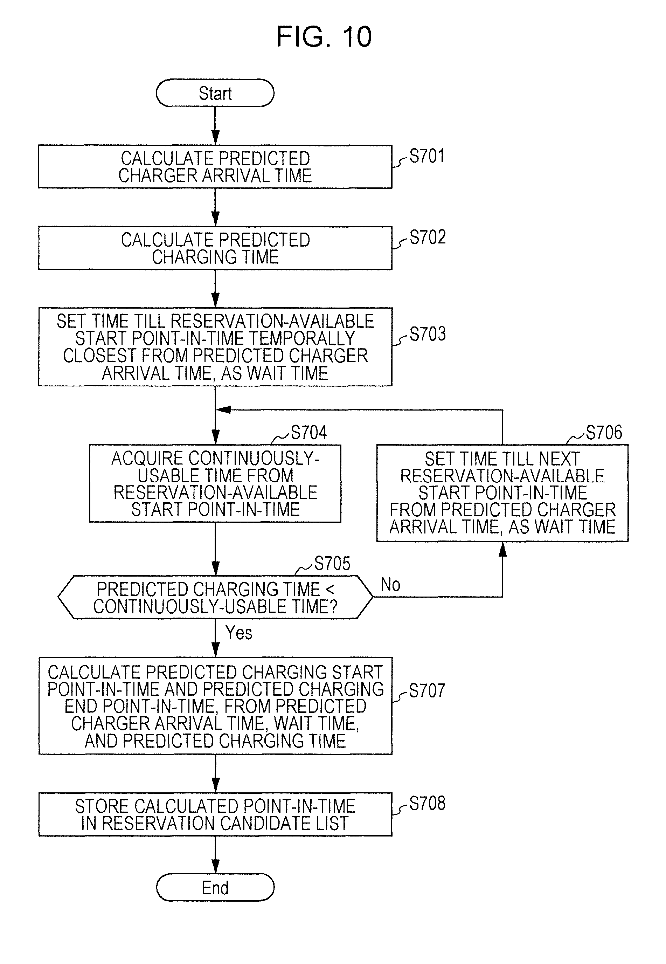

Fig. 10 is a flow chart illustrating a calculation flow for the predicted charging start point-in-time and the predicted charging end point-in-time.

In the calculation of the predicted charging end point-in-time of the charger 300, the amount or time necessary for the vehicle to travel over the route from the current vehicle position to the charger 300 is calculated, thereby calculating the predicted charger arrival point-in-time (step S701). At this time, a simple calculation may be made for the amount of time necessary to travel over the route from the current vehicle position to the charger 300, from the route distance over the route, and the vehicle speed, or calculation may be made from the traveling speed of other vehicles 100 traveling over that route.

Next, calculation is made for time necessary to complete charging of the vehicle 100 at the charger 300 from the start of charging, as predicted charging time (step S702). At this time, a simple calculation may be made based on the charging capability of the charger 300 and the charging power amount which the user desires, or calculation may be made by referencing charging history information held in the charging history information storage means 203 regarding the amount of time that has been necessary in the past for the same or a similar vehicle 100 to charge at the same or a similar charger 300.

Next, the reservation state of the charger 300 is referenced at the reservation state storage means 205, and calculation is made using the earliest point-in-time after the predicted charger arrival point-in-time that the charger 300 is unreserved, as a reservation-available start point-in-time, and with the time from the predicted charger arrival point-in-time to the reservation-available start point-in-time as a wait time (step S703).

The reservation state of the charger 300 is referenced at the reservation state storage means 205, and a continuously-usable time from the reservation-available start point-in-time is acquired (step S704). Whether or not the continuously-usable time from the reservation-available start point-in-time is larger than the predicted charging time is determined (step S705).

In a case where the continuously-usable time from the reservation-available start point-in-time is smaller than the predicted charging time, determination is made that sufficient charging cannot be made by charging from that reservation-available point-in-time, so the reservation state of the charger 300 is referenced at the reservation state storage means 205, the next available point-in-time is identified and used as the next reservation-available point-in-time, and the time from the predicted charger arrival point-in-time to the next reservation-available start point-in-time is used as the wait time (step S706), and the flow returns to step S704.

In a case where the continuously-usable time from the reservation-available start point-in-time is larger than the predicted charging time, the predicted charging start point-in-time and the predicted charging end point-in-time are calculated from the predicted charger arrival point-in-time, wait time, and predicted charging time (step S707). The calculated predicted charging start point-in-time and predicted charging end point-in-time are then stored in the reservation candidate list (step S708).

Now, there may be assumed cases where the continuously-usable time from the reservation-available start point-in-time is smaller than the predicted charting time, but the continuously-usable time is only shorter than the predicted charting time by a few minutes, for example. This is a case where, for example, the user has instructed the necessary charging power to be fill (100%) of the charging capacity of the power source of the electric automobile in response to the charging proposal from the information processing device, and while a 100% charge cannot be charged during the continuously-usable time, 95% can be charged, for example. If the user keeps following the loop form of steps S704 through S706 since the necessary charging power which the user has instructed cannot be charged, the charging start point-in-time will gradually become later, and accordingly the point-in-time of arrival at the destination will also become later. In such a situation, a proposal may be made by the information processing device for a charger which is insufficient to charge the instructed necessary charging power, but which can charge power to close to this level, and the destination can be reached relatively early. For example, a threshold value may be set, and the above proposal may be made in a case where a charge can be performed to a predetermined percentage or more of the necessary charging power.

Thus, the flowchart illustrating the calculation flow of the predicted charging start point-in-time and the predicted charging end point-in-time has been described.

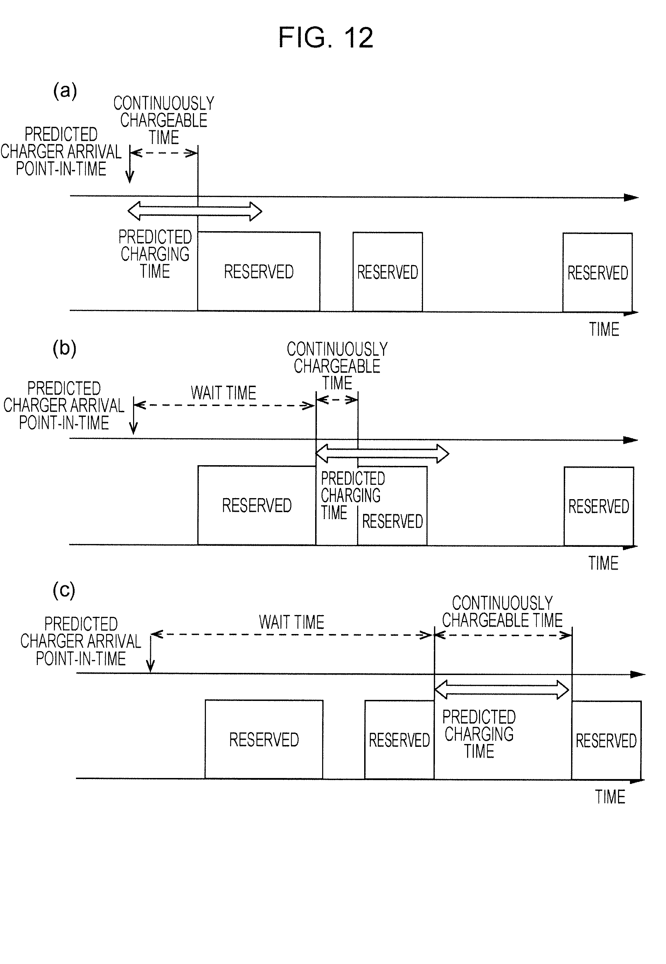

Fig. 12 is a diagram illustrating an example of a time chart indicating operations of the calculation of the predicted charging start point-in-time and predicted charging end point-in-time according to the present embodiment. More specifically, Fig. 12 is a diagram illustrating operations for identifying a point-in-time in the loop of steps S704 through S706 where the continuously-usable time is longer than the predicted charging time. Fig. 12(a) illustrates operations in the first loop. The initial continuously-chargeable time is shorter than the predicted charging time, so the conditions in step S705 are not satisfied, and the second loop is performed. Fig. 12(b) illustrates operations in the second loop. The next continuously-usable time is shorter than the predicted charging time, so the conditions in step S705 are not satisfied, and the third loop is performed. Fig. 12(c) illustrates operations in the third loop. The next continuously-chargeable time is longer than the predicted charging time, so the conditions in step S705 are satisfied. Accordingly, the charging start point-in-time and predicted charging end point-in-time can be calculated in step S707.

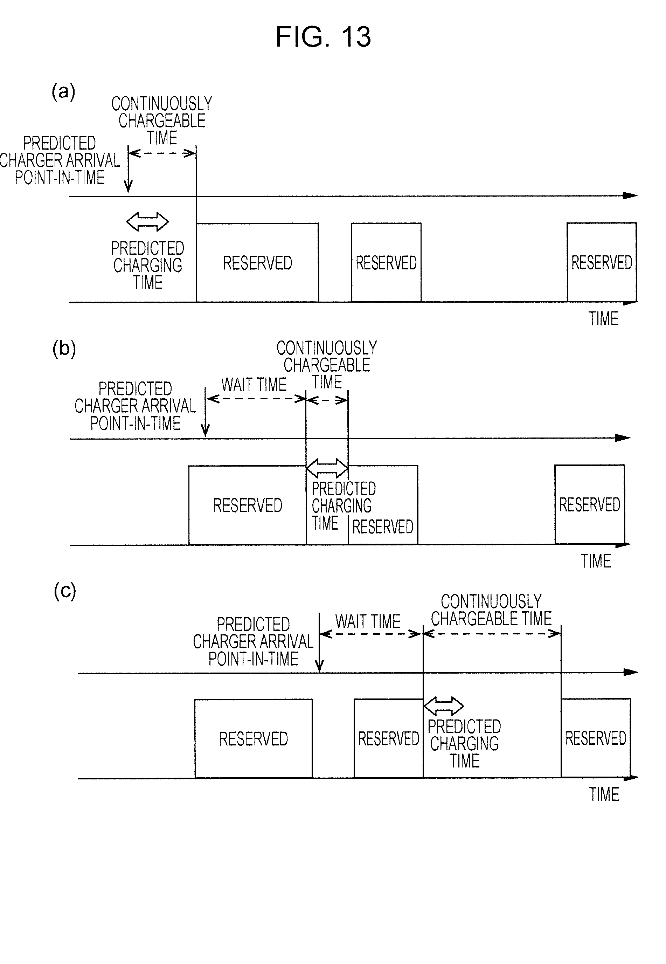

Fig. 13 illustrates an example of a time chart indicating operations of the calculation of the predicted charging start point-in-time and predicted charging end point-in-time at a charger according to the present embodiment. More specifically, Fig. 13 is a diagram illustrating how the charging start point-in-time and charging end point-in-time changes as the predicted charger arrival point-in-time changes.

In Fig. 13(a), the predicted charger arrival point-in-time is included in the continuously-chargeable time, and the continuously-chargeable time from the predicted charger arrival point-in-time is longer than the predicted charging time, so the charging start point-in-time is the predicted charger arrival point-in-time, and the predicted charging end point-in-time is the point-in-time where the predicted charging time has elapsed from the predicted charger arrival point-in-time.

In Fig. 13(b), the predicted charger arrival point-in-time is included in a reserved time slot where another user has reserved the charger, and the continuously-chargeable time from the end point-in-time of the reserved time slot of the other user is longer than the predicted charging time, so the charging start point-in-time is the end point-in-time of the reserved time slot of the other user, and the predicted charging end point-in-time is the point-in-time where the predicted charging time has elapsed from the end point-in-time of the reserved time slot of the other user.

In Fig. 13(c), the predicted charger arrival point-in-time is not included in a reserved time slot where another user has reserved the charger, but the continuously-chargeable time including the predicted charger arrival point-in-time is shorter than the predicted charging time, so the user has to wait till the start of the next continuously-chargeable time, the charging start point-in-time is the start point-in-time of the next continuously-chargeable time, and the predicted charging end point-in-time is the point-in-time where the predicted charging time has elapsed from the start point-in-time of the next continuously-chargeable time.

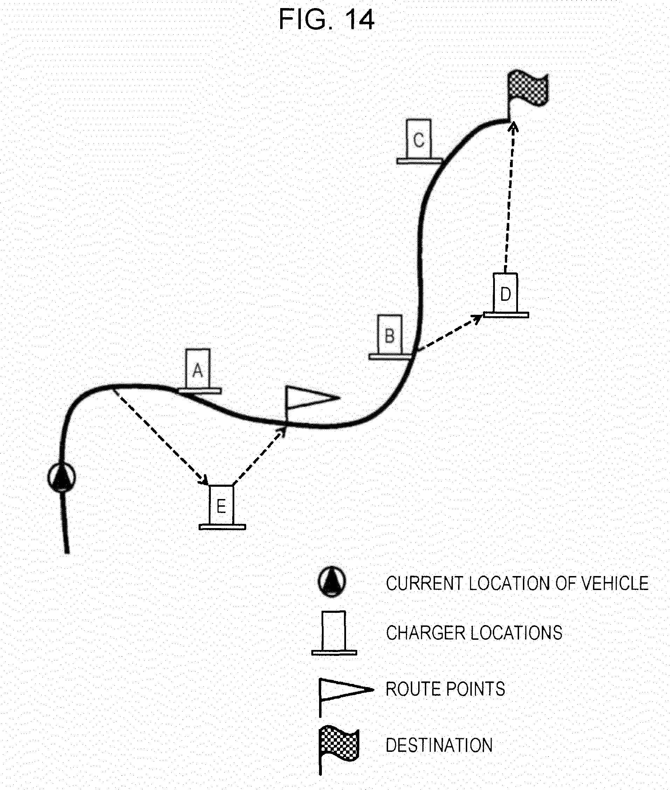

Fig. 14 is a diagram illustrating an example of the relationship between the current location of a vehicle, location of chargers, route points, destination, and route. This diagram illustrates a charger A, charger B, and charger C, being situated in that order along the route on the way from the current position to the destination. Also illustrated are a charger E and charger D at locations not on the route. In a case of using the charger A, charger B, or charger C situated on the route to the destination, the initial route from the current position to the destination is not departed from. However, in a case of using the charger D, the user leaves the route partway and stops by the charger D, and then after having left the charger D directly heads to the destination without returning to the original route. This is because the closest route from the charger D to the destination does not overlap the initial route. Also, in a case of using the charger E, the user leaves the route partway and stops by the charger E, and then returns to the original route after leaving the charger E and heads toward the destination. This is because the closest route from the charger E to the destination partially overlaps the initial route.

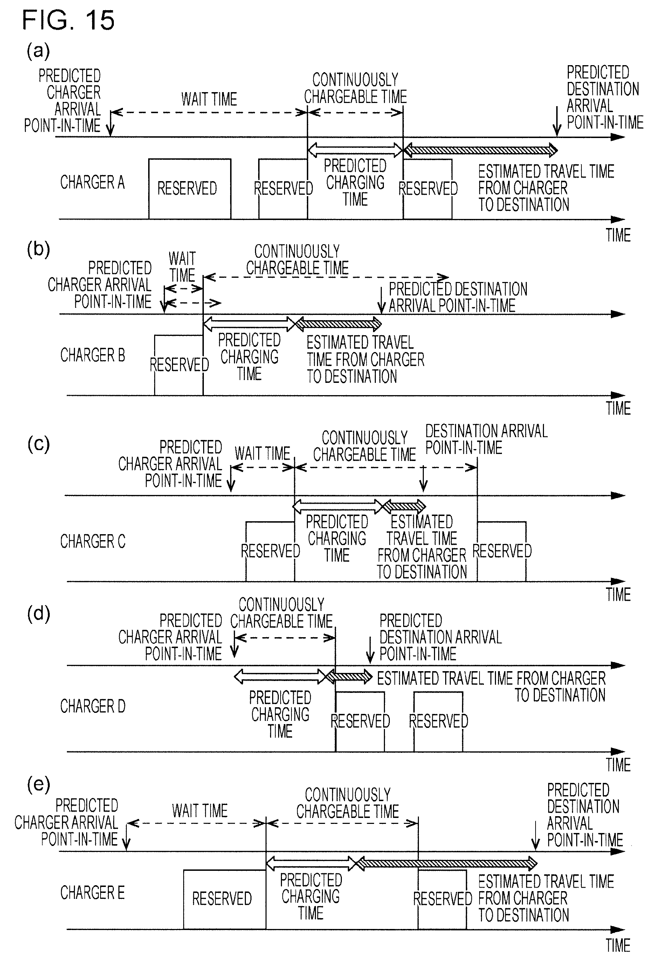

Fig. 15 is a diagram illustrating an example of a time chart indicating operations of the calculation of the predicted destination arrival point-in-time for each charger according to the present embodiment. The reservation states differ for each charger, and the distances from the current location to each charger differ, so the predicted charger arrival point-in-times each differ. Also, the distances from each charger to the destination differ, so the predicted destination arrival point-in-times each differ. The predicted destination arrival point-in-times for having charged at each charger are set as reservation candidates with priority in order from the earliest. In Fig. 15 for example, the predicted destination arrival point-in-times are calculated for each of the charger A through the charger E illustrated in Fig. 15(a) through Fig. 15(e), and since the charger where the predicted destination arrival point-in-time is earliest is the charger D, the charger D is set as the first reservation-planned charger in step S617. Note that the chargers A through E illustrated here correspond to the chargers A through E illustrated in Fig. 14, respectively.

For example, in a case of using charger A or E, the arrival point-in-time at the charger is not included in a predicted time slot for another user, but the continuously-chargeable time after the arrival point-in-time at the charger is shorter than the predicted charging time, so the user needs to wait for a start point-in-time of a continuously-chargeable time longer than the predicted charging time. Also, the point-in-time of arrival at the charger is early as compared to cases of using other chargers, but the distance to the destination after having completing charging and leaving the charger is longer as compared to cases of using other chargers. From these reasons, the predicted destination arrival point-in-time is consequently later in a case of using the charger A or E.

In a case of using the charger D, the arrival point-in-time at the charger is later than cases of using other chargers, and the initial route is left to stop by the charger, but there is no wait time from arriving at the charger before starting charging, and the distance to the destination after having completing charging and leaving the charger D is shorter as compared to cases of using other chargers. Accordingly, the predicted destination arrival point-in-time is earlier in the case of using the charger D, as compared to cases of using the other chargers which have wait time from arriving at the charger till starting charging.

### <Calculation Flow for Predicted Destination Arrival Point-In-Time>

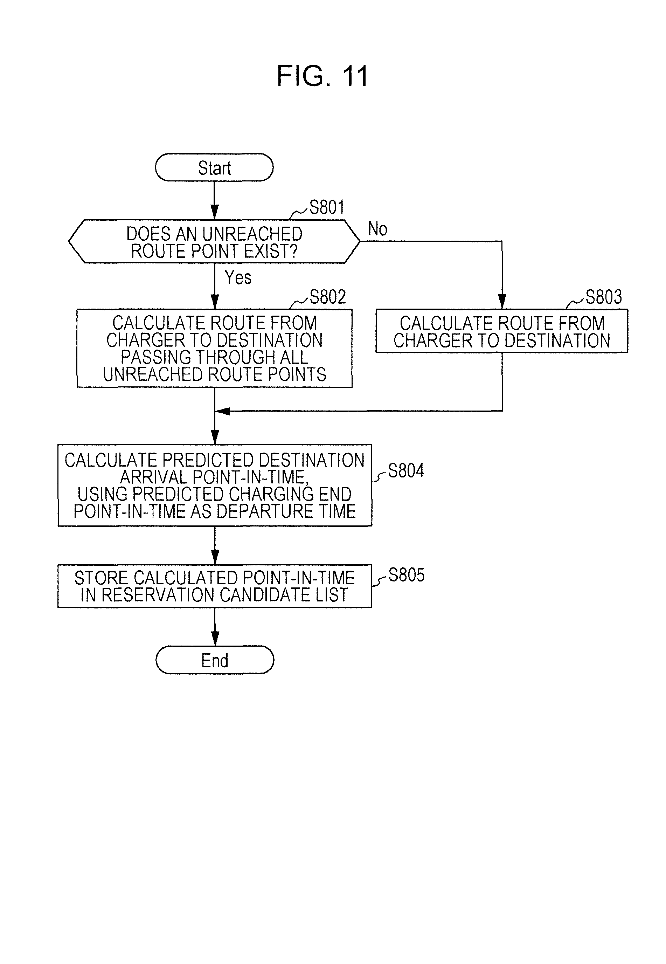

Fig. 11 is a flowchart illustrating a flow for calculation of the predicted destination arrival point-in-time.

In the calculation of the predicted destination arrival point-in-time, the route information stored in the route information storage means 108 of the vehicle 100 or the route information storage means 206 of the server 200 is referenced, and determination is made regarding whether or not an unreached route point exists in the initially set route points (step S801). In a case where no unreached route point exists, the route from the charger 300 to the destination is calculated (step S802). In a case where an unreached route point exists, the route from the charger 300 to the destination via all unreached route points is calculated (step S803). The predicted destination arrival point-in-time is then calculated from the calculated route and the predicted charging end point-in-time (step S804). The calculated predicted destination arrival point-in-time is then stored in the reservation candidate list (step S805).

Thus, the flowchart illustrating the calculation flow of the predicted destination arrival point-in-time has been described.

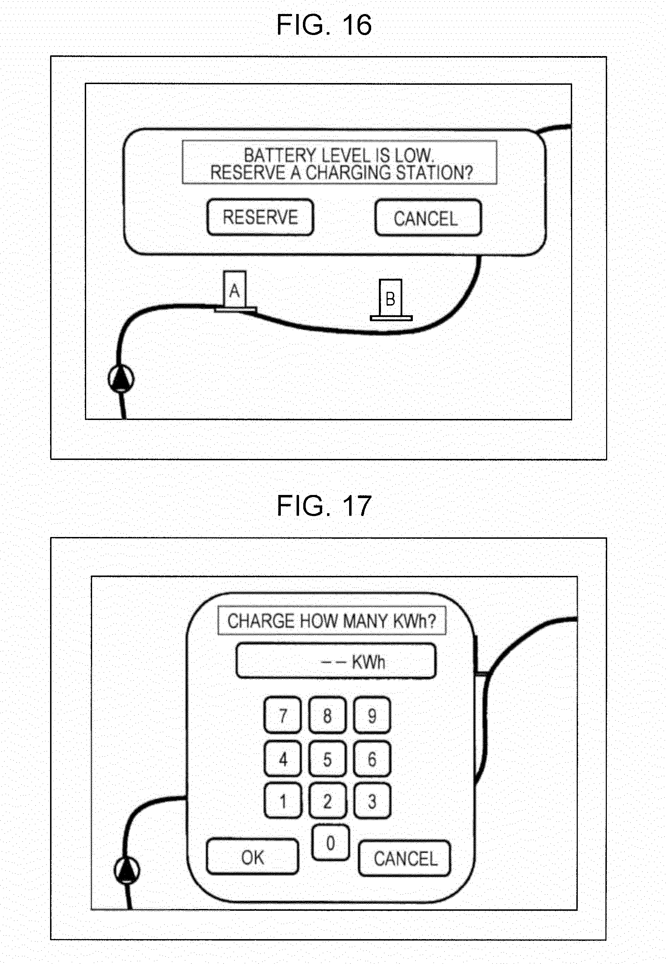

Fig. 16 is a diagram illustrating an example of a charging proposal display on a user interface of the information processing device according to the present disclosure. More specifically, Fig. 16 is an example of displaying an execution confirmation screen for charger reservation processing on the display unit in step S604. Conceivable user responses to respond to this include a method of specifying around the region of the text string "reserve" or "cancel" on the display screen using a steering switch, a touch panel, a pointing device, eye-gaze tracking, a keyboard, or the like, and voice input. Note that these are not restrictive, and any arrangement that enables input may be used.

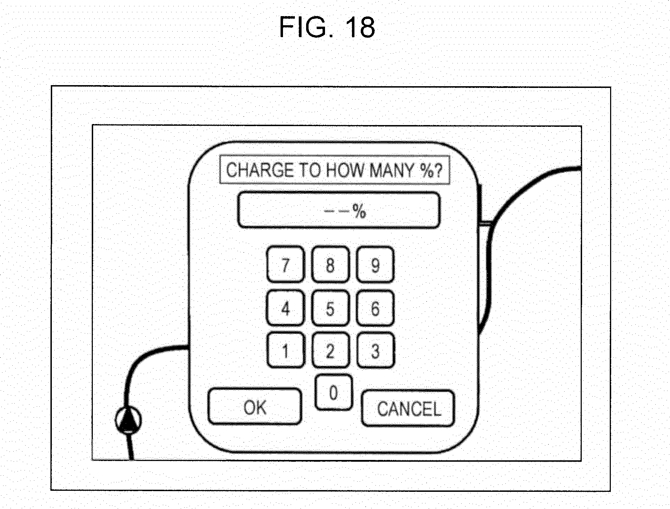

Fig. 17 and Fig. 18 are diagrams illustrating examples of a necessary charging power input display on the user interface of the information processing device according to the present disclosure. More specifically, these are examples of interfaces for obtaining necessary charging power from the user in step S607. Conceivable user responses to respond to this include a method of specifying the numeric keypad or around the region of the text string "OK" or "cancel" on the display screen using a steering switch, a touch panel, a pointing device, eye-gaze tracking, a keyboard, or the like, and voice input. Note that these are not restrictive, and any arrangement that enables input may be used.

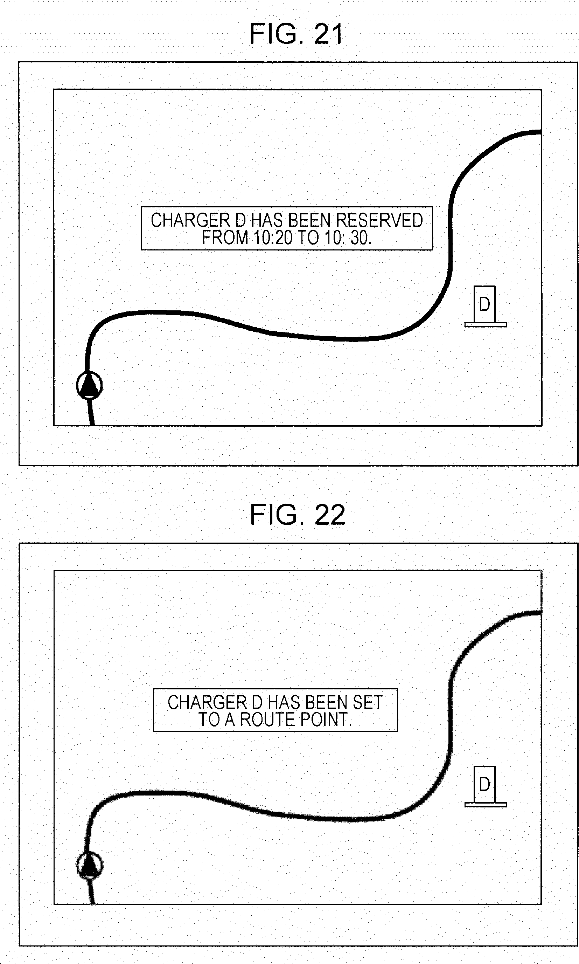

Fig. 21 is a diagram illustrating an example of a display, when executing prediction processing, on the user interface of the information processing device according to the present disclosure. More specifically, Fig. 21 is an example of displaying the results of reservation processing by the user. When a reservation is successful, the reserved charger and the reservation time are displayed to the user. This may be accompanied by audio, or may be performed by audio alone.

Figs. 22 and. 23 are diagrams illustrating examples of a display on the user interface of the information processing device according to the present disclosure, in a case of having set a charger, regarding which a reservation has been made, as a route point in an application which guides a travel route. More specifically, these are examples of notifying change in route due to reservation processing by the user. The information processing device according to the present disclosure changes the route in a case of having reserved a charger away from the original route due to having change a reservation. This is advantageous in that user operations are facilitated.

While description has been made by way of an example of a vehicle, this is not restricted to vehicles, and may be realized in other moving objects as well.

Note that the technology described in the above aspect may be realized by the following type of cloud service. However, the type of cloud service by which the above technology can be realized is not restricted to this.

### (Service Type 1: In-House Data Center Type)

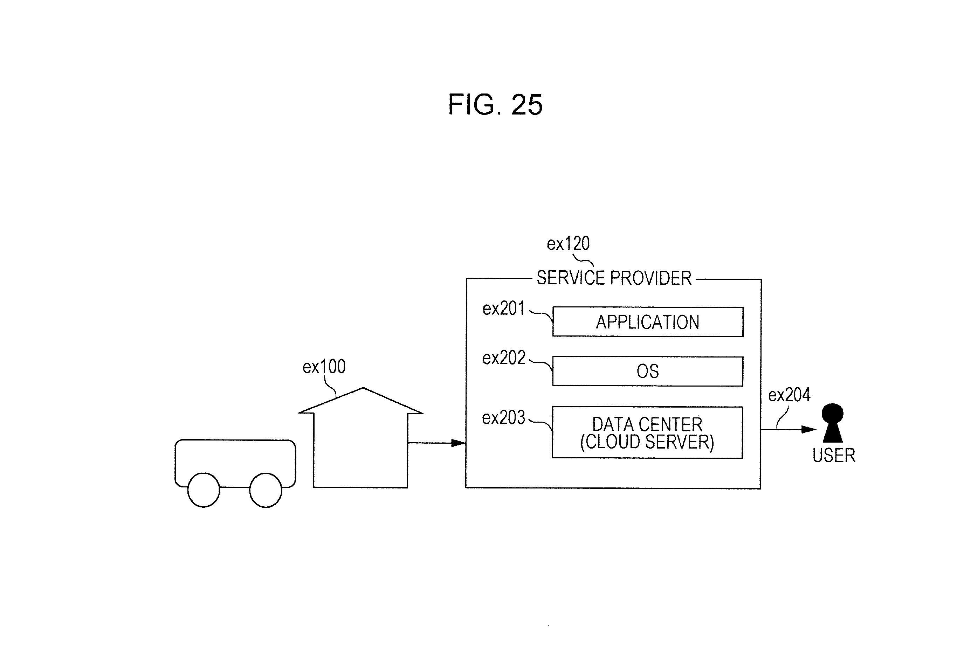

Fig. 25 illustrates a service type 1 (in-house data center type). This type is a type where a service provider ex120 obtains information from a group ex100, and provides a user with service. In this type, the service provider ex120 functions as a data center operator. That is to say, the service provider ex120 has a cloud server ex111 to manage big data. Accordingly, the data center operator does not exist.

In this type, the service provider ex120 operates and manages the data center (cloud server ex111) (ex203). The service provider ex120 also manages an OS (ex202) and application (ex201). The service provider ex120 provides services (ex204) using the OS (ex202) and application (ex201) managed by the service provider (ex120).

### (Service Type 2: laaS Usage Type)

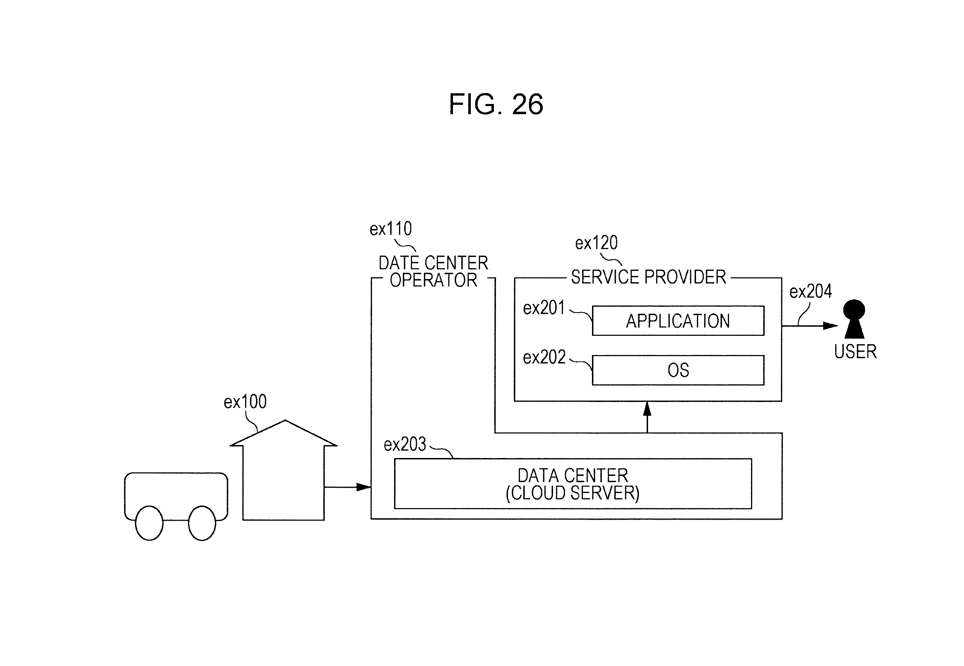

Fig. 26 illustrates a service type 2 (laaS usage type). laaS stands for "Infrastructure as a Service", and is a cloud service providing model where the base for computer system architecture and operation itself is provided as an Internet-based service.

In this type, the data center operator ex110 operates and manages the data center (cloud server ex 111) (ex203). The service provider (ex120) manages the OS (ex202) and application (ex201). The service provider (ex120) provides services (ex204) using the OS (ex202) and application (ex201) managed by the service provider ex120.

### (Service Type 3: PaaS Usage Type)

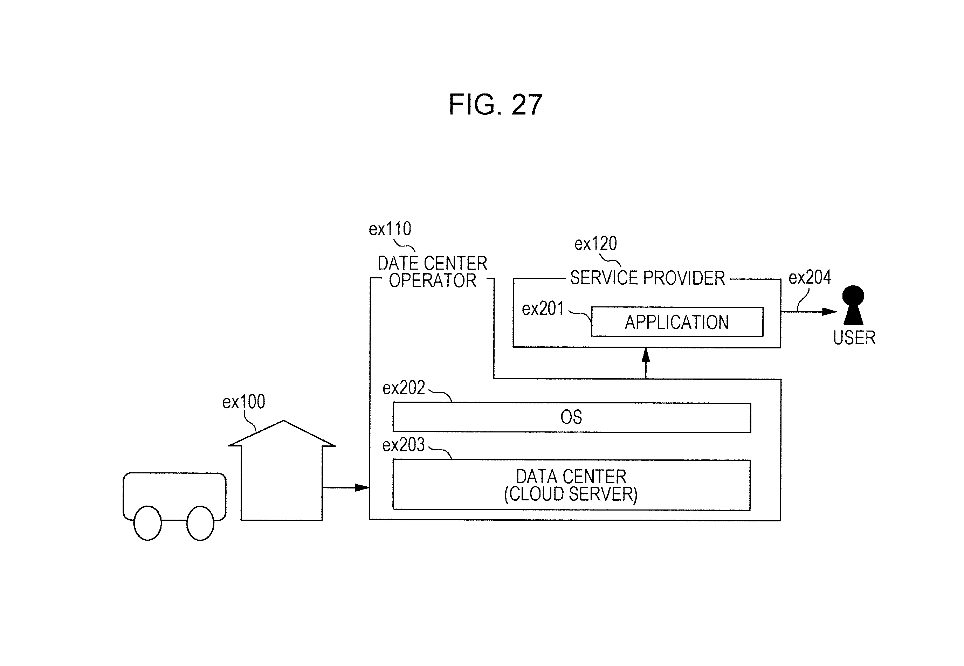

Fig. 27 illustrates a service type 3 (PaaS usage type). PaaS stands for "Platform as a Service", and is a cloud service providing model where a platform serving as the foundation for software architecture and operation is provided as an Internet-based service.

In this type, the data center operator ex110 manages the OS (ex202) and operates and manages the data center (cloud server ex111) (ex203). The service provider ex120 also manages the applications ex201. The service provider ex120 provides services (ex204) using the OS (ex202) managed by the data center operator and application (ex201) managed by the service provider ex120.

### (Service Type 4: SaaS Usage Type)

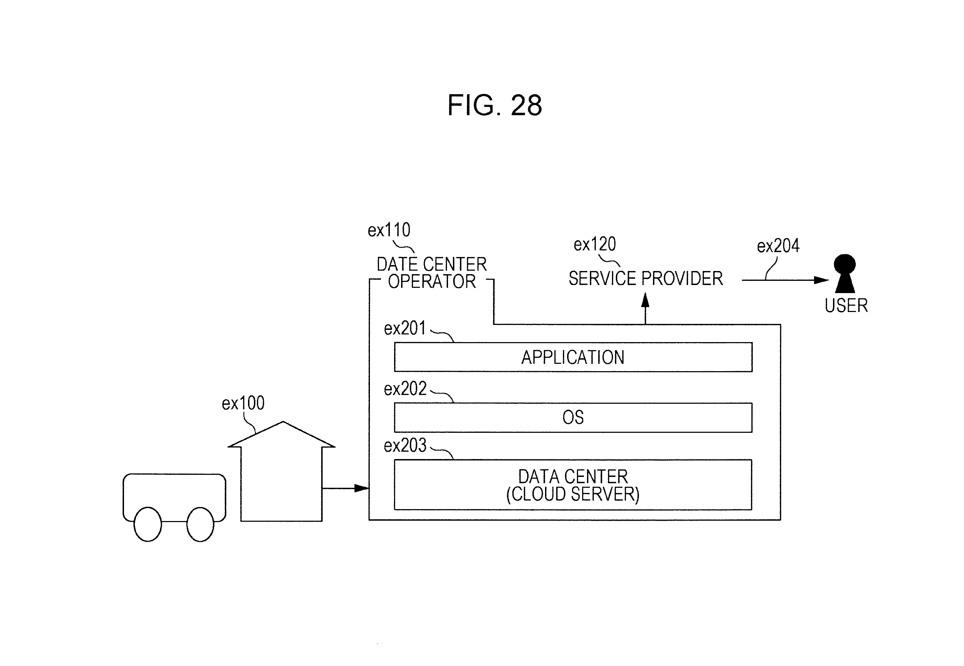

Fig. 28 illustrates a service type 4 (SaaS usage type). SaaS stands for "Software as a Service". A SaaS usage type cloud service is a cloud service providing model having functions where corporations or individuals (users) who do not have a data center (cloud server) can use applications provided by a platform provider having a data center (cloud server) for example, over a network such as the Internet.

In this type, the data center operator ex110 manages the application (ex201), manages the OS (ex202), and operates and manages the data center (cloud server ex111) (ex203). The service provider ex120 provides services (ex204) using the OS (ex202) and applications (ex201) managed by the data center operator ex110.

In each of these types of cloud service, the service provider ex120 performs the act of providing services. The service provider or data center operator may develop the OS, applications, database for big data, and so forth, in-house, or may commission this to a third party.

While the present disclosure has been described by way of the above-described embodiment and modifications thereof, it is needless to say that the present disclosure is not restricted to the above embodiments and so forth. The following cases are also included in the present disclosure.
(1) The above-described devices are, specifically, a computer system configured including a microprocessor, ROM, RAM, a hard disk unit, display unit, keyboard, mouse, and so forth. The Ram or hard disk unit stores a computer program. The devices achieve their functions by the microprocessor operating according to the computer program. The computer program is configured as a combination of multiple command codes representing commands to a computer, to achieve predetermined functions.
(2) Part or all of the components of which the above-described devices are configured may be configured as one system LSI (Large Scale Integration). A system LSI is a super-multifunctional LSI fabricated with multiple components integrated on a single chip, and specifically is a computer system configured including a microprocessor, ROM, RAM, and so forth. The RAM stores the computer program. The system LSI achieves its functions by the microprocessor operating according to the computer program.
   The components of which the above-described devices are configured may each be independently formed as a single chip, or part or all may be included in a single chip.
   While a system LSI has been mentioned, there are different names according to the degree of integration, such as IC, LSI, super LSI, and ultra LSI. The way in which the integrated circuit is formed is not restricted to LSIs, and may be realized by dedicated circuits or general-purpose processors. A FPGA (Field Programmable Gate Array) capable of being programmed after manufacturing the LSI, or a reconfigurable processor of which the connections and settings of circuit cells within the LSI can be reconfigured, may be used.
   Moreover, in the event of the advent of an integrated circuit technology which would replace LSIs by advance of semiconductor technology or a separate technology derived therefrom, such a technology may be used for integration of the functional blocks, as a matter of course. Application of biotechnology is a possibility.
(3) Part or all of the components of which the above-described devices are configured may be configured as an IC card detachably mountable to each device or a standalone module. The IC card or standalone module is a computer system configured including a microprocessor, ROM, RAM, and so forth. The IC card or standalone module may include the above-described super-multifunctional LSI. The IC card or standalone module achieves its functions by the microprocessor operating according to the computer program. The IC card or standalone module may be tamper-resistant.
(4) The present disclosure may be the above-described methods, or may be a computer program which realizes these methods by a computer, or may be digital signals made up of the computer program.
   The present disclosure may be the computer program or the digital signals recorded in a computer-readable recording medium, such as for example, a flexible disk, hard disk, CD-ROM, MO, DVD, DVD-ROM, DVD-RAM, BD (Blu-ray (a registered trademark) Disc), semiconductor memory, or the like. The present disclosure may also be the digital signals recorded in these recording mediums.
   The present disclosure may be an arrangement where the computer program or the digital signals are transmitted over an electric communication line, wireless or cable communication line, a network of which the Internet is representative, data broadcasting, or the like.
   The present disclosure may be a computer system having a microprocessor and memory, where the memory stores the computer program, and the microprocessor operates according to the computer program.
   This may also be carried out by another independent computer system, by the program or digital signals being recorded in the recording medium and being transported, or by the program or digital signals being transferred over the network or the like.
(5) The above-described embodiment and the above-described modifications may be combined.

### Industrial Applicability

The present disclosure is useful in a control method to control an information processing device, connected to an electric automobile, and connected to a reservation system that reserves a charger to charge a power source of the electric automobile, and storing an application to guide a travel route to the electric automobile based on map information.

### Reference Signs List

- 100: vehicle
- 101: input means
- 102: communication means
- 103: display means
- 104: processing means
- 105: current location identifying means
- 106: battery means
- 107: power receiving means
- 108: route information storage means
- 200: server
- 201: communication means
- 202: processing means
- 203: charging history information storage means
- 204: charger information storage means
- 205: reservation state storage means
- 206: route information storage means
- 207: customer information storage means
- 300: charger
- 301: communication means
- 302: authentication means
- 303: power feeding means

## Claims

1. A control method to control an information processing device, connected to an electric automobile, and connected to a reservation system that reserves a charger to charge a power source of the electric automobile, and storing an application to guide a travel route to the electric automobile based on map information,
wherein a computer of the information processing device is caused to
acquire information indicating a battery level of the power source from a controller managing the power source of the electric automobile,
access the reservation system in a case where the battery level has been determined to have fallen below a first threshold value, and search for a charger existing within a predetermined range from a current location, based on the map information,
receive information indicating an availability state and charging capability of the searched charger from the reservation system,
calculate a predicted charging end point-in-time at each charger, based on a predicted arrival point-in-time to each charger and the availability state and charging capability of each charger, in a case where a destination has been set in the application and in a case where a plurality of the searched chargers exist,
calculate a predicted destination arrival point-in-time of arrival at the destination from each charger, with the calculated predicted charging end point-in-time for each charger as the departure point-in-time from each charger,
effect control to select a charger of which the predicted destination arrival point-in-time is the earliest of the calculated predicted destination arrival point-in-times for each charger, and
perform processing for the reservation system to reserve the selected charger.

2. The control method according to Claim 1,
wherein processing is caused to be performed to automatically set the selected charger in the application as a route point.

3. The control method according to either of Claims 1 and 2,
wherein, in a case where determination is made that the battery level has fallen below the first threshold value, notification is caused to be made to the driver of the electric automobile to that effect via a display of the information processing device,
wherein detection is caused to be performed regarding whether or not an instruction has been made in response to the notification, to the effect of making a charging reservation for the power source,
wherein, in a case where the instruction has been made, the current location of the information processing device is caused to be detected using a position information detection system,
and wherein chargers in a predetermined range from the detected current location are cause to be searched based on the map information.

4. The control method according to any one of Claims 1 through 3,
wherein the predicted arrival point-in-time to each charger is calculated,
wherein a wait time at each charger is calculated, based on the predicted arrival point-in-time to each charger and the availability state of each charger,
and wherein a point-in-time at which the battery level of the power source reaches a predetermined amount or more is calculated as the predicted charging end point-in-time, based on the wait time at each charger and the charging capability of each charger.

5. The control method according to Claim 4,
wherein the predetermined amount is an amount equivalent to 100% of the capacity of the power source.

6. The control method according to Claim 4,
wherein the predetermined amount is an amount equivalent to 80% of the capacity of the power source.

7. The control method according to any one of Claims 1 through 6,
wherein, in a case where the instruction has been not made to the effect of making a charging reservation for the power source, determination is caused to be made regarding whether or not the battery level has fallen below a second threshold value that is lower than the first threshold value.

8. The control method according to Claim 7,
wherein, in a case where determination has been made that the battery level has fallen below the second threshold value, notification is caused to be made to the driver of the electric automobile to that effect via the display of the information processing device.

9. The control method according to any one of Claims 1 through 8,
wherein the predetermined range is a range of distance which the electric automobile can travel on the battery level of the power source.

10. The control method according to any one of Claims 1 through 9,
wherein, in a case where processing to reserve the charger has been caused to be executed, a display to the effect that the reservation has been completed, and a usage start point-in-time of the charger that has been reserved, are displayed on the display of the information processing device.

11. The control method according to Claim 10,
wherein, in a case where processing to reserve the charger has been caused to be executed, a usage end point-in-time of the charger that has been reserved is displayed on the display of the information processing device.

12. The control method according to any one of Claims 1 through 11,
wherein the charging capability of each charger is a charging amount per unit time of each of the chargers.

13. A program, stored in an information processing device, connected to an electric automobile, and connected to a reservation system that reserves a charger to charge a power source of the electric automobile, to guide a travel route to the electric automobile based on map information,
causing acquisition of information indicating a battery level of the power source from a controller managing the power source of the electric automobile,
causing access of the reservation system in a case where the battery level has been determined to have fallen below a first threshold value, and causing search for a charger existing within a predetermined range from a current location, based on the map information,
causing reception of information indicating an availability state and charging capability of the searched charger from the reservation system,
causing calculation of a predicted charging end point-in-time at each charger, based on a predicted arrival point-in-time to each charger and the availability state and charging capability of each charger, in a case where a destination has been set for the travel route of the electric automobile and in a case where a plurality of the searched chargers exist,
causing calculation of a predicted destination arrival point-in-time of arrival at the destination from each charger, with the calculated predicted charging end point-in-time for each charger as the departure point-in-time from each charger,
causing control to be effected to select a charger of which the predicted destination arrival point-in-time is the earliest of the calculated predicted destination arrival point-in-times for each charger, and
causing processing to be performed for the reservation system to reserve the selected charger.

14. An information processing device comprising:
a connector that is connected to an electric automobile;
a communication unit connected to a reservation system that reserves a charger to charge a power source of the electric automobile;
memory that stores map information;
a processing unit that guides a travel route of the electric automobile based on the map information; and
a display that guides a travel route of the electric automobile,
wherein the processing unit
acquires information indicating a battery level of the power source from the connector,
accesses the reservation system in a case where the battery level has been determined to have fallen below a first threshold value, and searches for a charger existing within a predetermined range from a current location, based on the map information,
receives information indicating an availability state and charging capability of the searched charger from the reservation system,
calculates a predicted charging end point-in-time at each charger, based on a predicted arrival point-in-time to each charger and the availability state and charging capability of each charger, in a case where a destination has been set for the travel route of the electric automobile and in a case where a plurality of the searched chargers exist,
calculates a predicted destination arrival point-in-time of arrival at the destination from each charger, with the calculated predicted charging end point-in-time for each charger as the departure point-in-time from each charger,
effects control to select a charger of which the predicted destination arrival point-in-time is the earliest of the calculated predicted destination arrival point-in-times for each charger, and
performs processing for the reservation system to reserve the selected charger.

15. A reservation system that reserves a charger to charge a power source of an electric automobile,
wherein an information processing device storing and implementing an application that guides a travel route of the electric automobile based on map information
acquires information indicating a battery level of the power source from a controller managing the power source of the electric automobile,
accesses the reservation system in a case where the battery level has been determined to have fallen below a first threshold value, and searches for a charger existing within a predetermined range from a current location, based on the map information, and
references the reservation system for information indicating an availability state and charging capability of the searched chargers,
wherein the reservation system
manages information indicating the availability state and charging capability of the chargers, and
transmits, to the information processing device, the information indicating the availability state and charging capability of the searched chargers, in accordance with the referencing,
and wherein the information processing device
calculates a predicted charging end point-in-time at each charger, based on a predicted arrival point-in-time to each charger and the availability state and charging capability of each charger, in a case where a destination has been set in the application and in a case where a plurality of the searched chargers exist,
calculates a predicted destination arrival point-in-time of arrival at the destination from each charger, with the calculated predicted charging end point-in-time for each charger as the departure point-in-time from each charger,
effects control to select a charger of which the predicted destination arrival point-in-time is the earliest of the calculated predicted destination arrival point-in-times for each charger, and
performs processing for the reservation system to reserve the selected charger.
